# EUROPEAN PATENT APPLICATION

(11) **EP 4 585 031 A1**
(43) Date of publication of application: **16.07.2025**
(21) Application number: 24223139.7
(22) Date of filing: 24.12.2024
(51) Int. Cl.: A01D 34/78, A01D 69/02

(54) **MOWER**

(30) Priority: 15.01.2024 CN 202410060449; 06.09.2024 CN 202411254549; 06.09.2024 CN 202411254648
(71) Applicant: Nanjing Chervon Industry Co., Ltd., Nanjing, Jiangsu 211106 (CN)
(72) Inventor: YAMAOKA, Toshinari, Nanjing (CN); DAI, Cheng, Nanjing (CN); GAO, Xuwen, Nanjing (CN); NI, Guigong, Nanjing (CN)
(74) Representative: Sun, Yiming

(57) **Abstract**

Provided is a mower. The mower includes: a body including a housing assembly; a cutting element used for performing a cutting function and including a first blade and a second blade; a chassis for accommodating at least part of the cutting element; a drive assembly including a first electric motor configured to drive the first blade and a second electric motor configured to drive the second blade; and a battery pack configured to power the drive assembly. The mower further includes a synchronization member drivingly connected to the first electric motor and the second electric motor. With the preceding technical solution, the mower can be provided, where blades in two cutting decks do not collide with each other, and uncut grass is prevented from being left behind.

## Description

### TECHNICAL FIELD

The present application relates to an electric machine and, in particular, to a mower.

### BACKGROUND

A mower is also referred to as a weeder, a grass mower, a lawn trimmer, and the like. A mower is a mechanical tool for trimming lawns, vegetation, and the like and includes a chassis, an engine, a walking mechanism, a cutter, and an operation device. The engine is mounted on the chassis. The cutter is mounted on an output shaft of the engine. The speed of the cutter is increased greatly through the high-speed rotation of the engine, thereby reducing the operation time of a weeding worker and saving a lot of human resources.

Mowers are classified into single-blade mowers and dual-blade mowers. For a dual-blade mower, two blades are disposed in two cutting decks one to one. When the rotation trajectories of the two blades intersect with each other, the two blades probably collide with each other. When the rotation trajectories of the two blades do not intersect with each other, uncut grass is probably left behind.

This part provides background information related to the present application, and the background information is not necessarily the existing art.

### SUMMARY

An object of the present application is to solve or at least alleviate part or all of the preceding problems. Therefore, an object of the present application is to provide a mower, where blades in two cutting decks do not collide with each other, and uncut grass is prevented from being left behind.

To achieve the preceding object, the present application adopts the technical solutions below.

A mower includes: a body including a housing assembly; a cutting element used for performing a cutting function and including a first blade and a second blade; a chassis for accommodating at least part of the cutting element; a drive assembly including a first electric motor configured to drive the first blade and a second electric motor configured to drive the second blade; and a battery pack configured to power the drive assembly. The mower further includes a synchronization member drivingly connected to the first electric motor and the second electric motor.

In some examples, the phase difference between the first electric motor and the second electric motor remains substantially constant, and the phase difference is greater than 0 degree and less than 90 degree.

In some examples, the distance between the axis of the first electric motor and the axis of the second electric motor is less than the blade length of the first blade or less than the blade length of the second blade.

In some examples, the ratio of the distance to the blade length of the first blade or the blade length of the second blade is higher than or equal to 0.9 and lower than 1.

In some examples, the mower further includes walking wheels, where the walking wheels include a front walking wheel assembly and a rear walking wheel assembly, a left front walking wheel has a first center line and a right front walking wheel has a second center line along a front and rear direction, and the distance from the first center line to the second center line is greater than or equal to 360 mm and less than or equal to 380 mm.

In some examples, a left rear walking wheel has a third center line along the front and rear direction, and the distance from the first center line to the third center line is greater than or equal to 0 mm and less than or equal to 5 mm.

In some examples, in a left and right direction, the distance from a leftmost cutting trajectory of a cutting assembly to the first center line is greater than or equal to 0 mm and less than or equal to 15 mm.

In some examples, in a left and right direction, the distance from a rightmost cutting trajectory of a cutting assembly to the second center line is greater than or equal to 0 mm and less than or equal to 15 mm.

In some examples, a positive pressure on the front walking wheel assembly along an up and down direction is less than or equal to 80 N.

In some examples, transmission wheels are disposed on an output shaft of the first electric motor and an output shaft of the second electric motor, respectively, and the synchronization member is mounted on the transmission wheels.

In some examples, an anti-rotation structure is disposed or formed on each of the output shaft of the first electric motor and the output shaft of the second electric motor.

In some examples, the chassis is made of a plastic material and is provided with a side discharge opening, and the opening circumference of the side discharge opening is greater than or equal to 500 mm.

In some examples, the opening area of the side discharge opening is greater than or equal to 200 cm².

In some examples, the mower further includes: a side discharge cover plate covering at least the side discharge opening; and a reinforcement member disposed at the opening edge of the side discharge opening and/or the cover edge of the side discharge cover plate.

In some examples, the mower further includes: a locking assembly, where the locking assembly is disposed on the chassis and the side discharge cover plate to lock the chassis and the side discharge cover plate in the case where the side discharge cover plate covers the side discharge opening.

In some examples, a mower includes: a body including a housing assembly; a cutting element used for performing a cutting function and including a first blade and a second blade; a chassis for accommodating at least part of the cutting element; a drive assembly including a first electric motor configured to drive the first blade and a second electric motor configured to drive the second blade; and a battery pack configured to power the drive assembly. The mower further includes a synchronization member drivingly connected to the first electric motor and the second electric motor, where the synchronization member, the first electric motor, and the second electric motor rotate synchronously.

In some examples, the phase difference between the first electric motor and the second electric motor remains substantially constant, and the phase difference is greater than 0 degree and less than 90 degree.

In some examples, a mower includes: a body including a housing assembly; a cutting element used for performing a cutting function and including a first blade and a second blade; a chassis for accommodating at least part of the cutting element; a drive assembly including a first electric motor configured to drive the first blade and a second electric motor configured to drive the second blade; and a battery pack configured to power the drive assembly. The mower further includes a synchronization member drivingly connected to the first electric motor and the second electric motor, where the synchronization member drives the first electric motor and the second electric motor to rotate at the same rotational speed.

In some examples, transmission wheels are disposed on an output shaft of the first electric motor and an output shaft of the second electric motor, respectively, and the synchronization member is mounted on the transmission wheels.

In some examples, the overall weight of the mower that is fully loaded is less than or equal to 80 kg.

The present application has the following benefit: the synchronization member is provided and connected to the first electric motor and the second electric motor so that the synchronization member can control the phase of the first electric motor and the phase of the second electric motor, thereby preventing a collision between two blades in two cutting decks and preventing uncut grass from being left behind.

### BRIEF DESCRIPTION OF THE DRAWINGS

FIG. 1 is a perspective view of a mower according to an example;
FIG. 2 is a view showing a chassis of the mower in FIG. 1;
FIG. 3 is a view showing a chassis of the mower in FIG. 1 including a side discharge assembly;
FIG. 4 is a top view of the mower in FIG. 1 including a side discharge assembly;
FIG. 5 is a view showing cutting decks of the mower in FIG. 1;
FIG. 6 is a view showing a chassis of the mower in FIG. 1 including a grass discharge channel;
FIG. 7 is a perspective view of the mower in FIG. 1 including a grass discharge channel;
FIG. 8 is a side sectional view of a grass discharge channel of the mower in FIG. 1;
FIG. 9 is a perspective view of the mower in FIG. 1 including a rear discharge baffle;
FIG. 10 is a perspective view of the mower in FIG. 1 including a grass collection basket and a rear cover;
FIG. 11 is a perspective view of the mower in FIG. 1 including a battery pack, a battery pack compartment, and a battery pack holder;
FIG. 12 is a perspective view of the mower in FIG. 11 excluding a battery pack, a battery pack compartment, and a battery pack holder;
FIG. 13 is a perspective view of a support portion of the mower in FIG. 1;
FIG. 14 is a side view of the mower in FIG. 1 including a support portion;
FIG. 15 is a rear view of the mower in FIG. 1 including a battery pack compartment;
FIG. 16 is a top view of the mower in FIG. 1 including a drive assembly and an outer cover of the drive assembly;
FIG. 17 is a side view of the mower in FIG. 1 including a battery pack and a battery pack compartment;
FIG. 18 is a top view of the mower in FIG. 1 including reinforcement members;
FIG. 19 is a front view of the mower in FIG. 1 including an accommodating space;
FIG. 20 is a side view of the mower in FIG. 1 including an accommodating space;
FIG. 21 is a top view of the mower in FIG. 1 including a heat dissipation channel;
FIG. 22 is a perspective view of the mower in FIG. 1 including heat dissipation airflow inlets;
FIG. 23 is a perspective view of a cover plate of the mower in FIG. 1;
FIG. 24 is a side view of a heat dissipation channel of the mower in FIG. 1;
FIG. 25 is a rear view of a mower including a handle height adjustment mechanism according to an example;
FIG. 26 is a perspective view of a mower including height adjustment mechanisms according to an example;
FIG. 27 is a side view of a hub motor wire harness of a mower according to an example;
FIG. 28 is a rear view of a mower including a hub motor wire harness according to an example;
FIG. 29 is a perspective view of a mower according to another example;
FIG. 30 is a view showing a chassis of the mower in FIG. 29;
FIG. 31 is a top view of the mower in FIG. 29;
FIG. 32 is a side view of battery packs of the mower in FIG. 29;
FIG. 33 is a perspective view of a control board protector according to an example;
FIG. 34 is an exploded perspective view of the control board protector in FIG. 33 enclosing an electric motor control board;
FIG. 35 is a schematic view showing the arrangement of a third electric motor and a fourth electric motor of a mower according to an example;
FIG. 36 is a schematic diagram showing that a third electric motor and a fourth electric motor of a mower are disposed on two sides of a grass discharge opening according to an example;
FIG. 37 is a schematic diagram showing that a third electric motor and a fourth electric motor of a mower are disposed on one side of a grass discharge opening according to an example;
FIG. 38 is a perspective view of the mower in FIG. 29 including electric motor covers;
FIG. 39 is a side view of the mower in FIG. 29 including a heat dissipation channel;
FIG. 40 is a top view of the mower in FIG. 29 including a heat dissipation channel;
FIG. 41 is a top view of the mower in FIG. 29 including a synchronization member;
FIG. 42 is a perspective view of the mower in FIG. 29 including a synchronization member;
FIG. 43 is a schematic view of an output shaft including anti-rotation structures according to an example;
FIG. 44 is a perspective view of the mower in FIG. 29 including a side discharge assembly;
FIG. 45 is a schematic view of a side discharge opening of the side discharge assembly in FIG. 44;
FIG. 46 is a perspective view of a side discharge cover plate of the side discharge assembly in FIG. 44; and
FIG. 47 is a perspective view showing that a locking assembly of the side discharge assembly in FIG. 44 is in an unlocking state.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

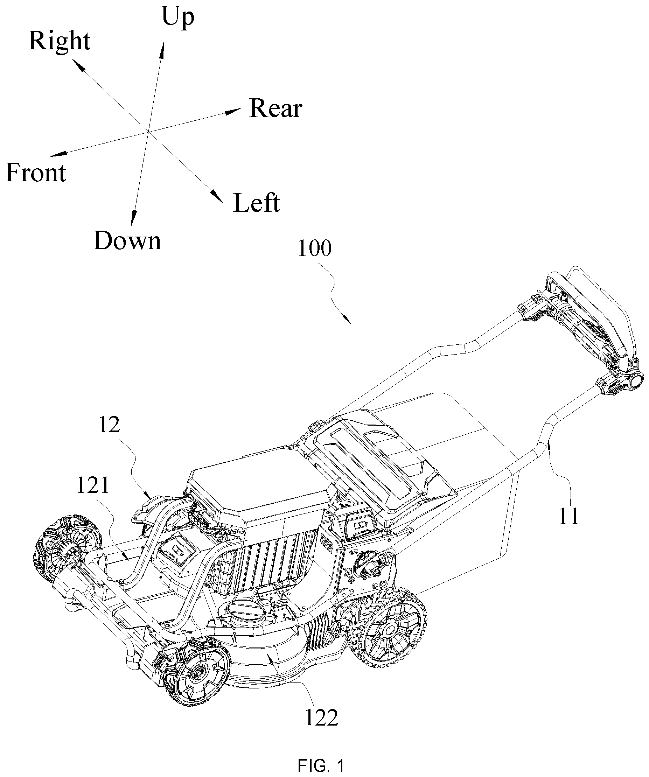

A mower 100 shown in FIG. 1 is configured for a user to cut grass in a lawn, for example, a lawn of a garden or a golf course. The grass in the lawn requires regular care and thus needs to be often cut with the mower 100. In this example, the mower 100 is a walk-behind working machine. When operating the mower 100, the user stands behind the mower 100 and pushes the mower 100 to walk on the ground.

As shown in FIG. 1, the mower 100 includes a handle assembly 11 and a body 12. The user holds the handle assembly 11 to operate the mower 100. The body 12 includes a housing assembly 121 and a chassis 122. The handle assembly 11 is rotatably connected to the housing assembly 121. To facilitate the description of technical solutions, a front side, a rear side, a left side, a right side, an upper side, and a lower side are defined as shown in FIG. 1.

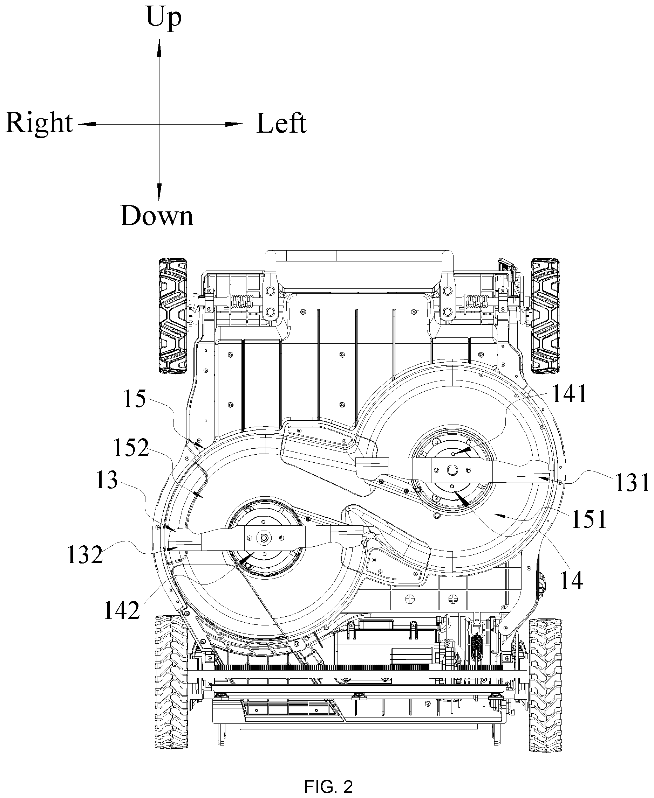

As shown in FIG. 2, the mower 100 further includes a cutting element 13 and a drive assembly 14. The cutting element 13 is used for performing a cutting function and includes a first blade 131 and a second blade 132. The drive assembly 14 is configured to drive the cutting element 13 to rotate and includes a first electric motor 141 and a second electric motor 142. The first electric motor 141 is configured to control the rotation of the first blade 131, and the second electric motor 142 is configured to control the rotation of the second blade 132. The chassis 122 is formed with an accommodating cavity 15 for accommodating at least part of the cutting element 13. A first cutting deck 151 and a second cutting deck 152 are disposed in the accommodating cavity 15. The first blade 131 is disposed in the first cutting deck 151, and the second blade 132 is disposed in the second cutting deck 152. Optionally, each of the first blade 131 and the second blade 132 may have a dimension of 390 mm. Optionally, each of the first blade 131 and the second blade 132 may have a dimension of 376 mm. In addition, the first blade 131 and the second blade 132 may have other dimensions. Alternatively, the dimension of the first blade 131 is different from the dimension of the second blade 132. The dimension of the first blade 131 and the dimension of the second blade 132 are not limited in the present application. Optionally, the mower 100 may have a cutting dimension of 760 mm. Optionally, the mower 100 may have a cutting dimension of 748 mm. In addition, the mower 100 may have other cutting dimensions. The cutting dimension of the mower 100 is not limited in the present application. The cutting dimension of the mower 100 refers to the cutting width of the mower 100, that is, the cutting width of the mower 100 in operation.

In some examples, the rotation direction of the first electric motor 141 is opposite to the rotation direction of the second electric motor 142, thereby causing the rotation direction of the first blade 131 to be opposite to the rotation direction of the second blade 132. When the rotation direction of the first electric motor 141 is clockwise, the rotation direction of the second electric motor 142 is counterclockwise. Alternatively, when the rotation direction of the first electric motor 141 is counterclockwise, the rotation direction of the second electric motor 142 is clockwise. Description is performed in the present application with the clockwise rotation direction of the first electric motor 141 and the counterclockwise rotation direction of the second electric motor 142.

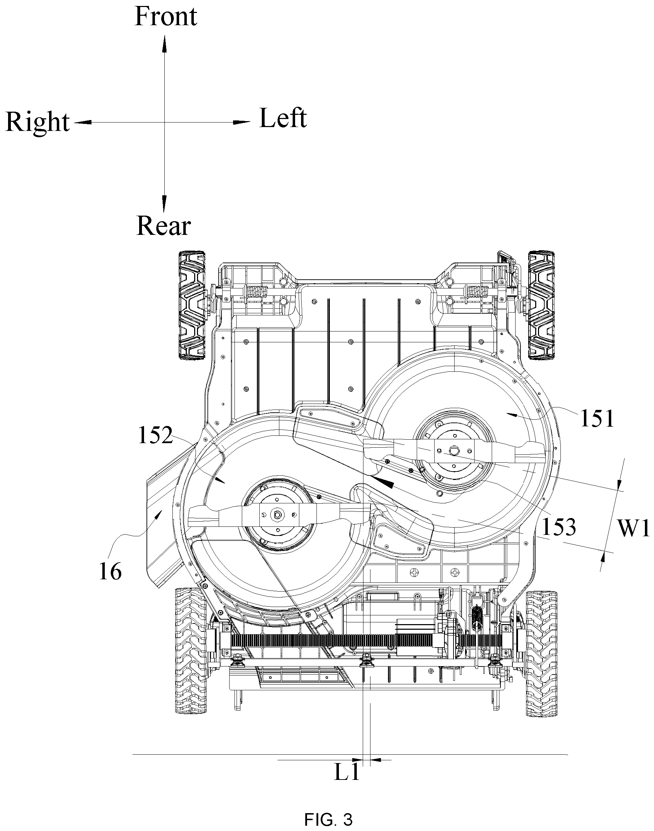

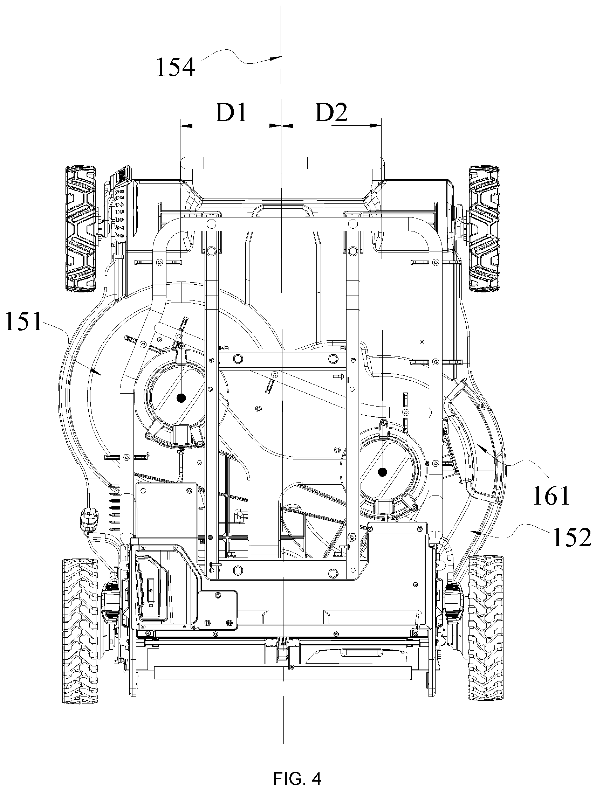

As shown in FIG. 3, a communication region 153 is disposed between the first cutting deck 151 and the second cutting deck 152. Thus, the first electric motor 141 may control the first blade 131 to move grass clippings in the first cutting deck 151 into the second cutting deck 152 through the communication region 153. As shown in FIG. 3, the mower 100 further includes a side discharge assembly 16. The side discharge assembly 16 is connected to the second cutting deck 152 to perform a grass discharge function. The second electric motor 142 may control the second blade 132 to move grass clippings in the second cutting deck 152 into the side discharge assembly 16, thereby discharging the grass. As shown in FIG. 4, the mower 100 further includes a side discharge cover plate 161 disposed between the second cutting deck 152 and the side discharge assembly 16. Before the mower 100 performs the grass discharge function by using the side discharge assembly 16, the side discharge cover plate 161 needs to be opened so that the second cutting deck 152 communicates with the side discharge assembly 16. Optionally, opening the side discharge cover plate 161 may refer to detaching the side discharge cover plate 161 from the second cutting deck 152 and then mounting the side discharge assembly 16 to the second cutting deck 152. Optionally, opening the side discharge cover plate 161 may refer to lifting the side discharge cover plate 161 upwards to directly mount the side discharge assembly 16 to the second cutting deck 152. In this case, the side discharge cover plate 161 abuts against the upper side of the side discharge assembly 16.

Furthermore, the side discharge cover plate 161 is opened and the second cutting deck 152 is caused to have a gap so that the air pressure in the second cutting deck 152 is lower than the air pressure in the first cutting deck 151. Thus, it is easier for the grass clippings to enter the second cutting deck 152 from the first cutting deck 151. The first blade 131 is controlled to move the grass clippings in the first cutting deck 151 into the second cutting deck 152, and then the second blade 132 is controlled to move the grass clippings in the second cutting deck 152 into the side discharge assembly 16, thereby implementing the side discharge function of the dual-blade mower with blades rotating in opposite directions. The side discharge cover plate 161 may be disposed on the mower 100 through an elastic assembly or in other manners, which is not limited in the present application.

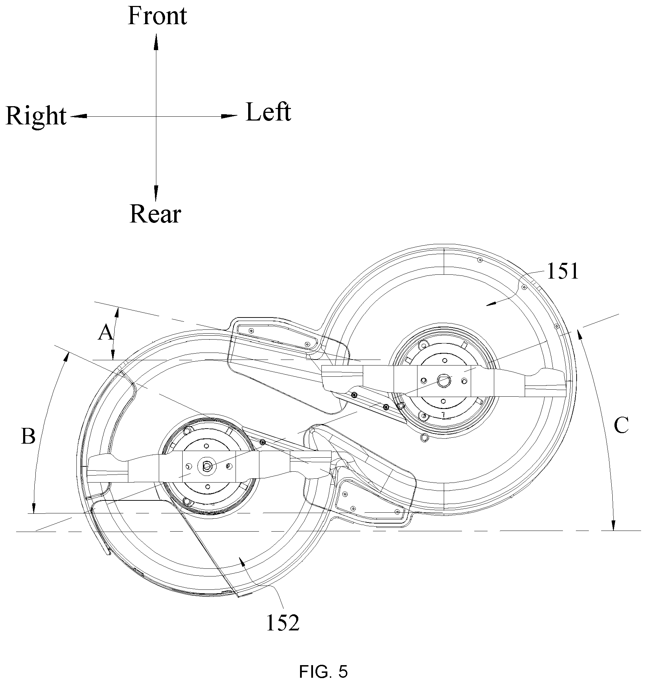

Optionally, the channel width W1 of the communication region 153 is greater than or equal to 80 mm. Optionally, the channel width W1 may be 100 mm. Optionally, the channel width W1 may be 120 mm. Optionally, the channel width W1 may be 190 mm. Optionally, the channel width W1 may be 197.5 mm. As shown in FIG. 5, an upper connecting portion (which is a front connecting portion relative to the mower 100) of the communication region 153 forms an included angle A with a plane along a left and right direction of the mower 100. The included angle A is greater than or equal to 10 degrees and less than or equal to 45 degrees. For example, the included angle A may be 12.5 degrees. An extension line of one of the edges forming the included angle A passes the first electric motor 141. A lower connecting portion (which is a rear connecting portion relative to the mower 100) of the communication region 153 forms an included angle B with a plane along the left and right direction of the mower 100. The included angle B is greater than or equal to 15 degrees and less than or equal to 45 degrees and has an extension line passing the left electric motor. For example, the included angle B may be 30 degrees. The extension line of one of the edges forming the included angle B passes the second electric motor 142. The channel width of the communication region 153 and the angles of the upper and lower connecting portions of the communication region 153 are set so that it is convenient for the first blade 131 to move the grass clippings in the first cutting deck 151 into the second cutting deck 152.

As shown in FIG. 5, the line connecting the center of the first cutting deck 151 to the center of the second cutting deck 152 forms an included angle C with a plane extending along the left and right direction of the mower 100. The included angle C is greater than or equal to 5 degrees and less than or equal to 60 degrees. Optionally, the included angle C may be 20 degrees. Optionally, the included angle C may be 30 degrees. Optionally, the included angle C may be 50 degrees. That is, the first cutting deck 151 and the second cutting deck 152 are obliquely disposed on the chassis 122 instead of being horizontally disposed on the chassis 122. As shown in FIG. 3, the first blade 131 and the second blade 132 have a projection of an overlapping cutting dimension on a plane extending along the left and right direction of the mower 100. The length L1 of the projection is greater than or equal to 5 mm. Optionally, the length L1 of the projection may be 8 mm. Optionally, the length L1 of the projection may be 12 mm. Optionally, the length L1 of the projection may be 18.4 mm. Thus, the two blades have a relatively large overlapping cutting region so that no cutting gap can exist between two cutting decks when the mower 100 is in operation, thereby preventing uncut grass from being left behind. Optionally, the distance between the first blade 131 and the second blade 132 is greater than or equal to 3 mm and less than or equal to 10 mm. That is, the distance between a tip of the first blade 131 and a tip of the second blade 132 is greater than or equal to 3 mm and less than or equal to 10 mm. Thus, the first blade 131 and the second blade 132 do not collide with each other when cutting simultaneously. Optionally, the distance between the first blade 131 and the second blade 132 may be 5.5 mm. Optionally, the distance between the first blade 131 and the second blade 132 may be 8 mm.

A cutting deck center line 154 exists between the first cutting deck 151 and the second cutting deck 152 and extends along a front and rear direction of the mower 100. In addition, the distance D1 between the cutting deck center line 154 and the center of the first cutting deck 151 is equal to the distance D2 between the cutting deck center line 154 and the center of the second cutting deck 152. The mower 100 also has a mower center line. The mower center line extends along the front and rear direction of the mower 100 and divides the mower 100 into two parts along the front and rear direction of the mower 100. As shown in FIG. 4, in this example, the mower center line coincides with the cutting deck center line 154. Thus, the mower 100 can have a relatively narrow width in the left and right direction of the mower 100, thereby having a relatively small volume.

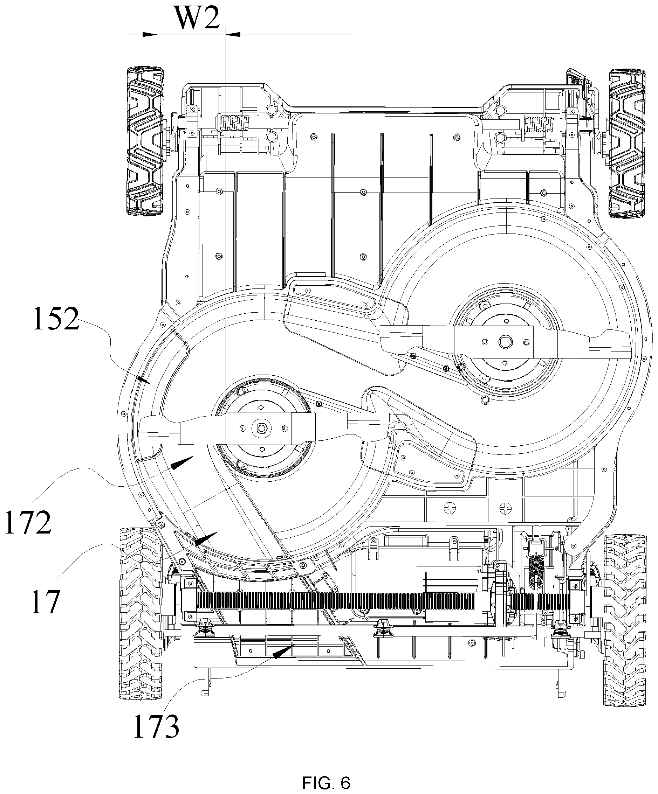

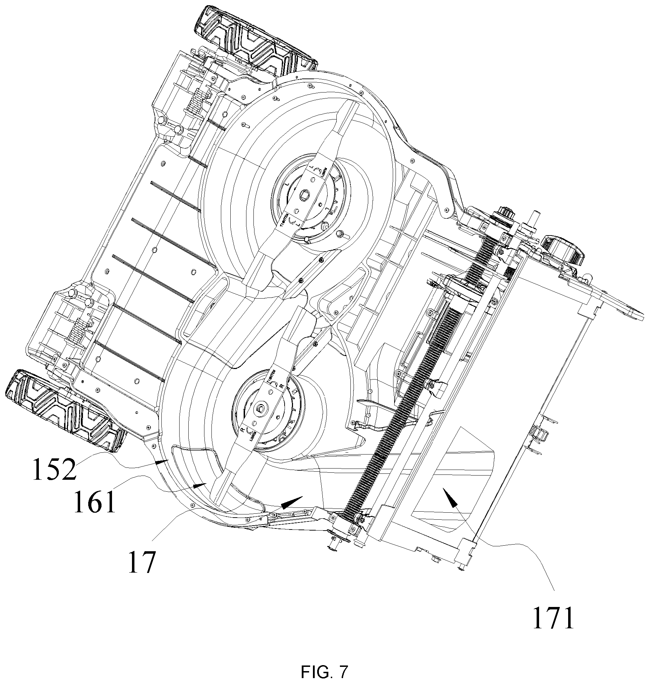

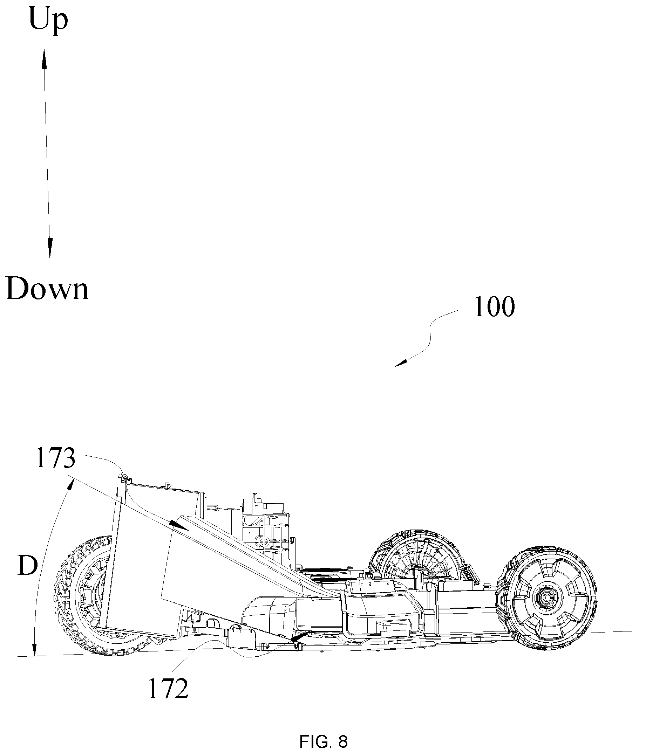

In some examples, as shown in FIGS. 6 and 7, the mower 100 further includes a grass discharge channel 17. One end of the grass discharge channel 17 is connected to the second cutting deck 152, and the other end of the grass discharge channel 17 includes a rear grass discharge opening 171 provided at the rear end of the mower 100. The first electric motor 141 controls the first blade 131 to move the grass clippings in the first cutting deck 151 into the second cutting deck 152 through the communication region 153. The second electric motor 142 controls the second blade 132 to move the grass clippings in the second cutting deck 152 into the grass discharge channel 17. The grass discharge channel 17 is used for guiding the grass clippings from the second cutting deck 152 to the rear grass discharge opening 171. The grass discharge channel 17 includes a first end 172 connected to the second cutting deck 152 and a second end 173 connected to the rear grass discharge opening 171. In an up and down direction, the second end 173 is higher than the first end 172. As shown in FIG. 8, the line connecting the first end 172 to the second end 173 forms an included angle D with a plane extending along the front and rear direction of the mower 100. The included angle D is greater than or equal to 20 degrees and less than or equal to 50 degrees. Optionally, the included angle D may be 30 degrees. Optionally, the included angle D may be 40 degrees. Thus, when discharging the grass to the rear, the mower 100 does so upwards.

In some examples, the length of the grass discharge channel 17 is greater than or equal to 200 mm and less than or equal to 500 mm. For example, the length of the grass discharge channel 17 may be 370 mm. The width W2 of the first end 172 of the grass discharge channel 17 connected to the second cutting deck 152 is greater than or equal to 100 mm. For example, the width W2 may be 132 mm. The rear grass discharge opening 171 may be rectangular, where the length of the rear grass discharge opening 171 is greater than or equal to 100 mm, and the width of the rear grass discharge opening 171 is greater than or equal to 80 mm. For example, the length of the rear grass discharge opening 171 may be 212 mm, and the width of the rear grass discharge opening 171 may be 151 mm. The grass discharge channel 17 is configured to be relatively long. The grass inlet (that is, the first end 172 connected to the second cutting deck 152) of the grass discharge channel 17 is configured to be relatively wide. The grass outlet (that is, the rear grass discharge opening 171) of the grass discharge channel 17 is configured to be relatively long and wide. Thus, when discharging the grass, the grass discharge channel 17 is less prone to blockage, and the discharge of the grass is facilitated.

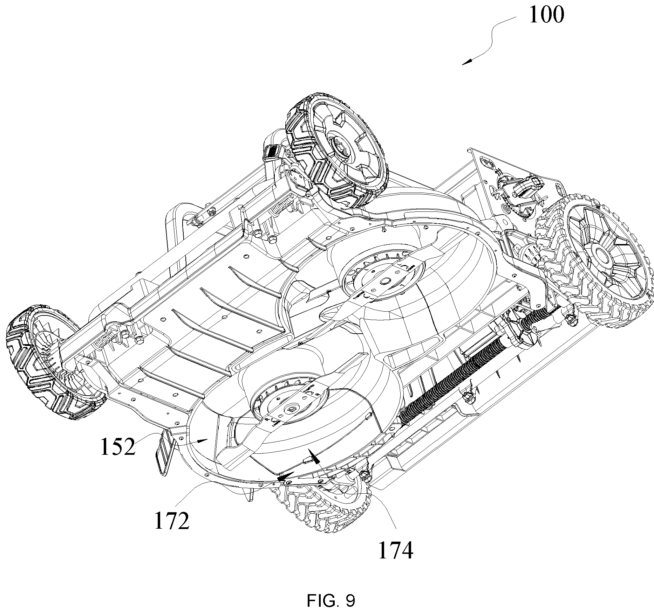

As shown in FIG. 9, the mower 100 further includes a rear discharge baffle 174. The rear discharge baffle 174 is disposed in the first end 172 of the grass discharge channel 17 connected to the second cutting deck 152. Before the mower 100 performs a rear grass discharge function through the grass discharge channel 17, the rear discharge baffle 174 needs to be opened to implement the communication of the grass discharge channel 17. Furthermore, the rear discharge baffle 174 is opened and the second cutting deck 152 is caused to have a gap so that the air pressure in the second cutting deck 152 is lower than the air pressure in the first cutting deck 151. Thus, it is easier for the grass clippings to enter the second cutting deck 152 from the first cutting deck 151. Optionally, before the mower 100 performs the rear grass discharge function through the grass discharge channel 17, the side discharge cover plate 161 needs to be properly closed (that is, the side discharge cover plate 161 is shut) to prevent the grass from being discharged from the side discharge assembly 16. Optionally, before the mower 100 performs the rear grass discharge function through the grass discharge channel 17, both the side discharge cover plate 161 and the rear discharge baffle 174 may be opened so that the mower 100 performs both the side discharge function and the rear discharge function simultaneously. In addition, when the mower 100 performs the side discharge function, the rear discharge baffle 174 also needs to be shut so that the mower 100 can perform side discharge. The rear discharge baffle 174 may be disposed on the mower 100 through an elastic assembly or in other manners, which is not limited in the present application.

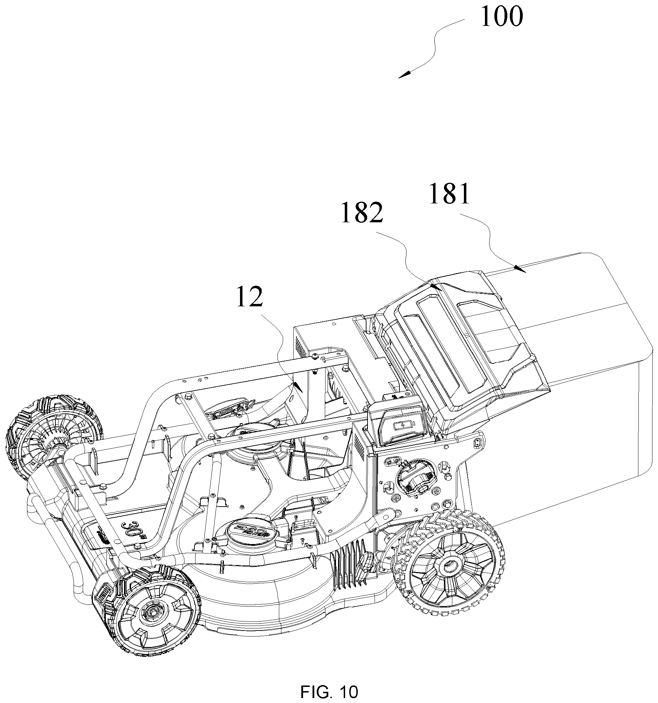

In some examples, as shown in FIG. 10, the mower 100 further includes a grass collection basket 181 connected to the body 12. When the mower 100 performs the rear discharge function, the grass clippings exiting through the grass discharge channel 17 may be projected into the grass collection basket 181. The angle of the grass discharge channel 17 in the up and down direction is set so that the grass clippings can be projected into the grass collection basket 181 relatively high. Thus, it is easier for the grass collection basket 181 to be filled with the grass, thereby improving the grass collection rate and grass collection weight of the grass collection basket 181. The grass clippings are prevented from entering the grass collection basket 181 at a low angle to cause the interface connecting the grass collection basket 181 to the body 12 to be blocked by a large quantity of grass clippings. As shown in FIG. 10, the mower 100 further includes a rear cover 182 connected to the body 12 through a housing shaft. The rear cover 182 may be supported on the grass collection basket 181, preventing the leakage of some grass clippings from the grass collection basket 181 during the rear discharge of the mower 100.

In some examples, when the side discharge cover plate 161 and the rear discharge baffle 174 are each in a closed state on the mower 100, the first electric motor 141 may control the first blade 131 to move the grass clippings in the first cutting deck 151 into the second cutting deck 152 through the communication region 153, the second electric motor 142 may control the second blade 132 to move the grass clippings in the second cutting deck 152 back into the communication region 153, and the grass clippings fall out of the communication region 153. Such a cutting process is repeated so that the mower 100 can perform the function of breaking the grass into pieces. The communication region 153, the side discharge cover plate 161, and the rear discharge baffle 174 are provided so that the mower 100 in the present application has the side discharge function, the rear discharge function, and the function of breaking the grass into pieces.

In some examples, the first blade 131 and the second blade 132 are each provided with a fixed phase so that the first blade 131 and the second blade 132 do not collide with each other during rotation. The fixed phase is determined based on empirical values. In some examples, the transmission between the first electric motor 141 and the second electric motor 142 may be performed through a belt so that the first electric motor 141 and the second electric motor 142 have fixed relative positions. Additionally, when the first electric motor 141 has no power, the second electric motor 142 may drive the first electric motor 141 to rotate. Alternatively, when the second electric motor 142 has no power, the first electric motor 141 may drive the second electric motor 142 to rotate.

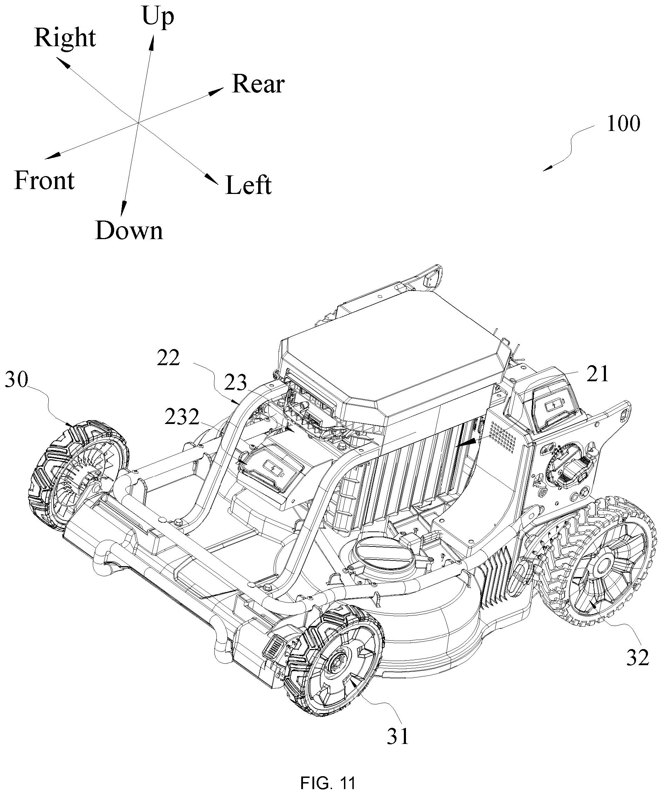

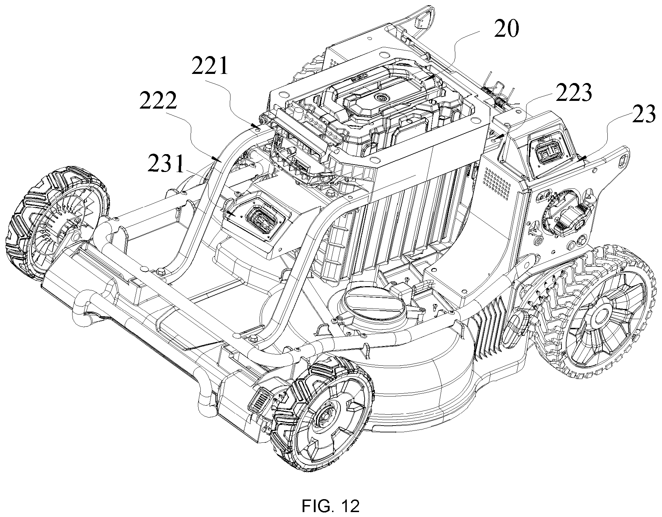

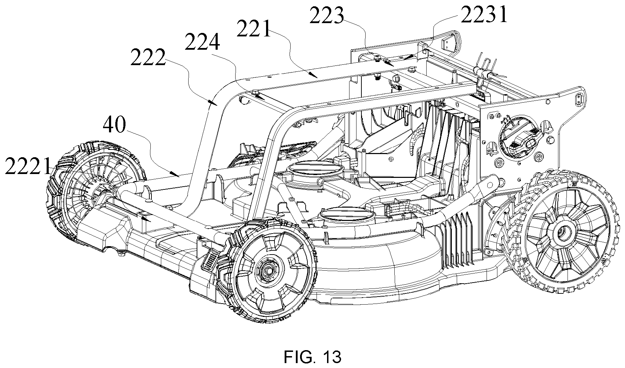

As shown in FIGS. 11 and 12, the mower 100 further includes a battery pack 20, a battery pack compartment 21, and a battery pack holder 22. The battery pack 20 is configured to power the drive assembly 14. The battery pack compartment 21 is used for accommodating the battery pack 20. The battery pack holder 22 is used for fixing and supporting the battery pack compartment 21 so that the battery pack compartment 21 can be at least partially disposed on the housing assembly 121. As shown in FIG. 11, the mower 100 further includes walking wheel assemblies 30. The walking wheel assemblies 30 include a front walking wheel assembly 31 and a rear walking wheel assembly 32. In some examples, the battery pack holder 22 includes a support portion 221, a first force transmission portion 222, and a second force transmission portion 223. The support portion 221 is used for supporting the battery pack compartment 21. As shown in FIGS. 12 and 13, support portions 221 are disposed on the left and right sides of the battery pack compartment 21, supporting the battery pack compartment 21 on the housing assembly 121. Optionally, to prevent the battery pack compartment 21 from moving back and forth on the battery pack holder 22, a limiting structure 224 may be disposed on the front side of the battery pack compartment 21. The limiting structure 224 is disposed on the support portions 221 to fix the battery pack compartment 21 on the housing assembly 121 together with the support portions 221.

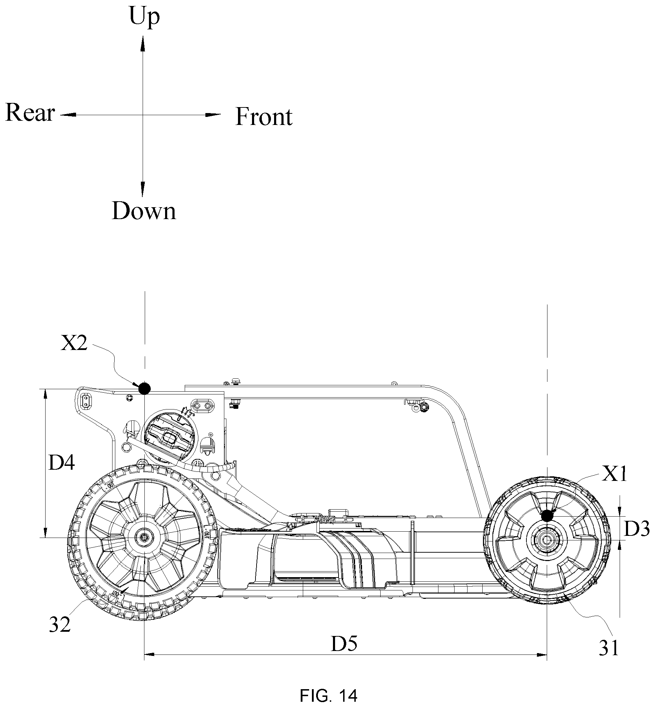

In some examples, as shown in FIG. 13, the first force transmission portion 222 is a front force transmission portion. The first force transmission portion 222 is connected to the support portion 221 to receive the gravity generated by the weight of the battery pack compartment 21. The first force transmission portion 222 further includes a force output portion 2221 for outputting the gravity generated by the weight of the battery pack compartment 21. One end of the first force transmission portion 222 is connected to the support portion 221. The other end of the first force transmission portion 222 is not connected to the support portion 221, which is the force output portion 2221. As shown in FIG. 14, the force output portion 2221 has a first projection X1 that is formed on a plane extending along the up and down direction of the mower 100 and passing the axle of the front walking wheel assembly 31. The distance D3 between the first projection X1 and the axle of the front walking wheel assembly 31 is less than or equal to 50 mm so that at least part of the gravity generated by the weight of the battery pack compartment 21 is outputted through the first force transmission portion 222. Optionally, the first force transmission portion 222 may be directly fixed to the housing assembly 121. Optionally, the first force transmission portion 222 may be indirectly fixed to the housing assembly 121 through another support.

In some examples, as shown in FIG. 13, the second force transmission portion 223 is a rear force transmission portion. The second force transmission portion 223 is also connected to the support portion 221 to receive the gravity generated by the weight of the battery pack compartment 21. The second force transmission portion 223 further includes a force output portion 2231 for outputting the gravity generated by the weight of the battery pack compartment 21. One end of the second force transmission portion 223 is connected to the support portion 221. The other end of the second force transmission portion 223 is not connected to the support portion 221, which is the force output portion 2231. As shown in FIG. 14, the force output portion 2231 has a second projection X2 that is formed on a plane extending along the front and rear direction of the mower 100 and passing the axle of the rear walking wheel assembly 32. The distance D4 between the second projection X2 and the axle of the rear walking wheel assembly 32 is less than or equal to 100 mm so that at least part of the gravity generated by the weight of the battery pack compartment 21 is outputted through the second force transmission portion 223. Optionally, the second force transmission portion 223 may be directly fixed to the housing assembly 121. Optionally, the second force transmission portion 223 may be indirectly fixed to the housing assembly 121 through another support. The first force transmission portion 222 and the second force transmission portion 223 are connected to the support portion 221 separately. The force output portion 2221 of the first force transmission portion 222 is fixed near the axle of the front walking wheel assembly 31. The force output portion 2231 of the second force transmission portion 223 is fixed near the axle of the rear walking wheel assembly 32. Thus, the weight of the battery pack compartment 21 (or the battery pack compartment 21 mounted with the battery pack 20) is distributed onto the axle of both the front walking wheel assembly 31 and the axle of the rear walking wheel assembly 32, thereby reducing the risk of deformation in the middle of the housing assembly 121.

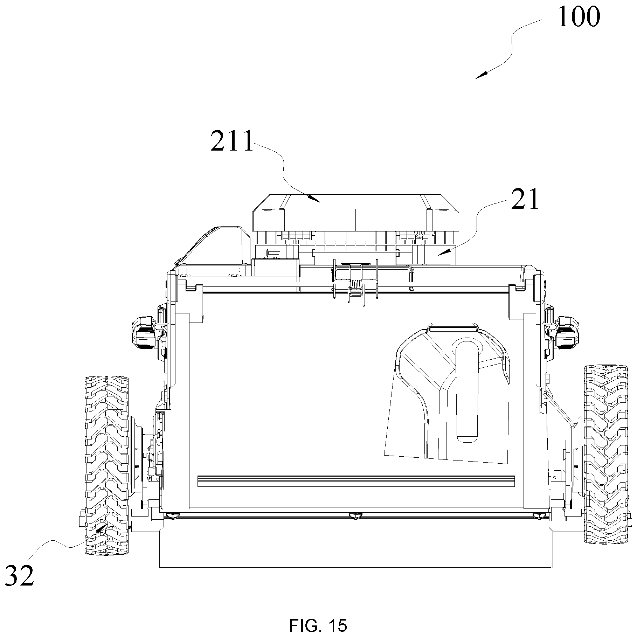

In some examples, as shown in FIG. 15, a battery pack cover 211 is disposed on the battery pack compartment 21. The battery pack cover 211 is at least partially transparent so that it is convenient for the user to view the electric quantity of the battery pack 20 at all times. Optionally, the battery pack cover 211 may be fixed to the battery pack compartment 21 through a latch mechanism. The latch mechanism may be disposed on the battery pack cover 211 or the battery pack compartment 21. The latch mechanism includes a snap and an elastic recovery member. When the user presses the snap, the elastic recovery member is compressed. In this case, the battery pack cover 211 is opened from the battery pack compartment 21. When the user releases the snap and presses the battery pack cover 211, the elastic recovery member returns to its original state. In this case, the battery pack cover 211 is closed onto the battery pack compartment under the action of gravity.

In some examples, the battery pack 20 may be a single battery pack. In this case, the battery pack 20 is a high-capacity battery pack, and the capacity of the battery pack 20 is higher than or equal to 40 Ah. In some examples, the battery pack 20 may include multiple battery packs. In this case, the battery pack 20 is a low-capacity battery pack, and the capacity of the battery pack 20 is higher than or equal to 2 Ah and lower than or equal to 20 Ah. Regardless of whether the battery pack 20 is the single high-capacity battery pack or includes the multiple low-capacity battery packs, the battery lifetime of the battery pack 20 is longer than or equal to 100 minutes, and the power of the battery pack 20 is greater than or equal to 2000 W Thus, the mower 100 is supported to work for a long period of time and be capable of working with high efficiency so that the user does not need to frequently replace the battery pack 20. Optionally, an interface for a high-capacity battery pack is disposed on the battery pack compartment 21 and configured to be connected to the high-capacity battery pack. Optionally, an interface for a low-capacity battery pack may be disposed on the battery pack compartment 21 and configured to be connected to the low-capacity battery pack. Optionally, a battery pack adapter may be disposed on the interface for the high-capacity battery pack. The interface for the high-capacity battery pack is connected to the multiple low-capacity battery packs through the battery pack adapter. The battery pack compartment 21 adaptable to both the high-capacity battery pack and the multiple low-capacity battery packs is provided so that it is convenient for the user to make a choice based on their needs, thereby saving the use costs of the user. In addition, the multiple low-capacity battery packs are provided so that the problem can be solved that it is inconvenient to insert or remove the high-capacity battery pack when running out of power. For the multiple low-capacity battery packs, only a low-capacity battery pack running out of power needs to be replaced, thereby facilitating replacement.

In some examples, as shown in FIGS. 11 and 12, the mower 100 may further include a charging device 23 for charging the battery pack 20. The charging device 23 may be disposed on the battery pack compartment 21. Alternatively, the charging device 23 may be disposed at another portion on the mower 100 other than the battery pack compartment 21, where the portion is convenient for the operation of the user. The position of the charging device 23 is not limited in the present application. FIGS. 11 and 12 show exemplary positions where the charging device 23 is disposed. The charging device 23 includes a charging port 231 and a charging port cover 232. When the charging device 23 is not in use, the charging port cover 232 covers the charging port 231 to prevent dust, the grass clippings, and the like from entering the charging port 231 and affecting charging. When the charging device 23 is in use, the charging port 231 is mated with a charging gun to charge the battery pack 20. In this case, the charging port cover 232 abuts against the charging gun, ensuring the safety of charging the battery pack 20 through the charging gun. Optionally, the orientation of the charging port 231 is obliquely upward so that it is convenient for the user to charge the battery pack 20 through the charging gun. The charging device 23 is disposed on the mower 100 so that the battery pack 20 can be charged directly when running out of power. Thus, the battery pack 20 does not need to be replaced, and it is convenient for the user to use the mower 100.

In some examples, the housing assembly 121 is made of single-layer plastics. The housing assembly 121 includes the chassis 122 and the grass discharge channel 17. The chassis 122 and the grass discharge channel 17 are integrally formed. The housing assembly 121 is integrated. The chassis 122, the grass discharge channel 17, and the appearance of the mower 100 share single-layer plastics integrally formed. No outer cover exists above the chassis 122 or the grass discharge channel 17. Therefore, the housing assembly 121 has a relatively light weight. Thus, the mower 100 has a relatively light overall weight.

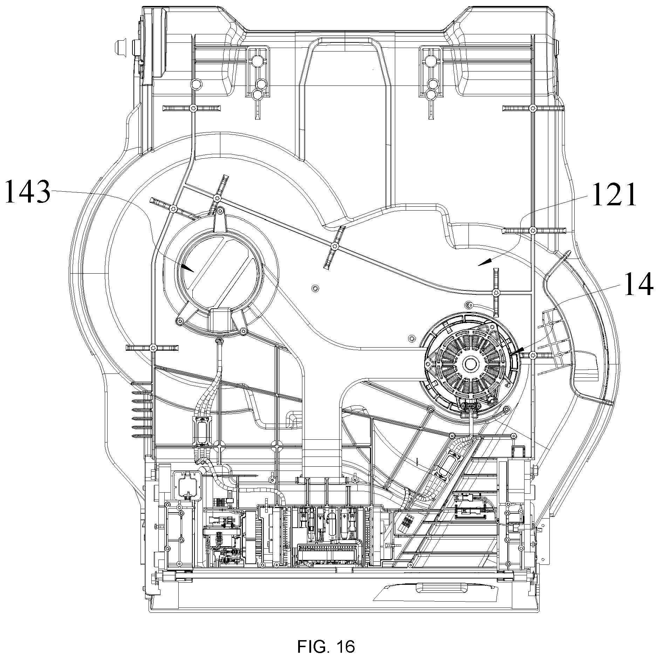

In some examples, the drive assembly 14 is disposed in the chassis 122 and specifically in the accommodating cavity 15 of the chassis 122. As shown in FIG. 16, since the housing assembly 121 is made of the single-layer plastics, no outer cover exists above the chassis 122, and the drive assembly 14 is exposed outside the housing assembly 121. To prevent the exposure of the drive assembly 14, the mower 100 further includes an outer cover 143 of the drive assembly. The outer cover 143 of the drive assembly is disposed on the upper side of the housing assembly 121 to cover the drive assembly 14 and prevent water or debris from falling onto the drive assembly 14.

In some examples, the hubs of the walking wheel assembly 30 are made of high-strength alloy plastics. The strength of each of the hubs is ensured, and the weight of each of the hubs is reduced. In some examples, the handle assembly 11 is a hollow metal handle. In some examples, the handle assembly 11 may be directly fixed to the housing assembly 121. Alternatively, the handle assembly 11 may be fixed to the housing assembly 121 through a metal reinforcement plate. Thus, the strength of the connection can be ensured. The handle assembly 11 is provided with a switch to control the mower 100 to walk, cut the grass, or stop. A connecting wire for controlling the mower 100 is disposed in a handle tube of the handle assembly 11, thereby preventing the connecting wire from being damaged outside. The hubs of the walking wheel assembly 30 that are made of the high-strength alloy plastics and the hollow metal handle 11 are provided, thereby further reducing the overall weight of the mower 100. Thus, it is ensured that the weight of the mower 100 not mounted with accessories such as the battery pack 20 is less than or equal to 60 kg. In addition, as described above in the present application, the weight of the battery pack compartment 21 (or the battery pack compartment 21 mounted with the battery pack 20) is distributed onto the axle of the front walking wheel assembly 31 and the axle of the rear walking wheel assembly 32. This configuration aims to prevent, on the premise that it is ensured that the whole mower 100 is lightweight, the risk of deformation in the housing assembly 121 made of the single-layer plastics. Thus, the overall structural stability of the mower 100 is improved.

In some examples, the diameter of the front walking wheel assembly 31 is greater than or equal to 150 mm and less than or equal to 300 mm. The diameter of the rear walking wheel assembly 32 is greater than or equal to 150 mm and less than or equal to 300 mm. Optionally, the diameter of the front walking wheel assembly 31 may be 200 mm, and the diameter of the rear walking wheel assembly 32 may be 270 mm. As shown in FIG. 14, the distance D5 between the front walking wheel assembly 31 and the rear walking wheel assembly 32 is greater than or equal to 700 mm and less than or equal to 750 mm. The distance between the front walking wheel assembly 31 and the rear walking wheel assembly 32 is not large so that the whole mower 100 is not long, thereby making the whole mower 100 more lightweight. In addition, the case is prevented where the mower 100 is relatively long in the front and rear direction to increase the distance (that is, the distance between the axle of the front walking wheel assembly 31 and the axle of the rear walking wheel assembly 32) between the front axle and the rear axle and result in less rigid support of the housing assembly 121. In addition, according to the preceding description in the present application, the mower center line coincides with the cutting deck center line 154 so that the mower 100 is prevented from being relatively wide in the left and right direction. In this manner, the reduction of the overall dimension of the mower 100 is facilitated, and the whole mower 100 is more lightweight.

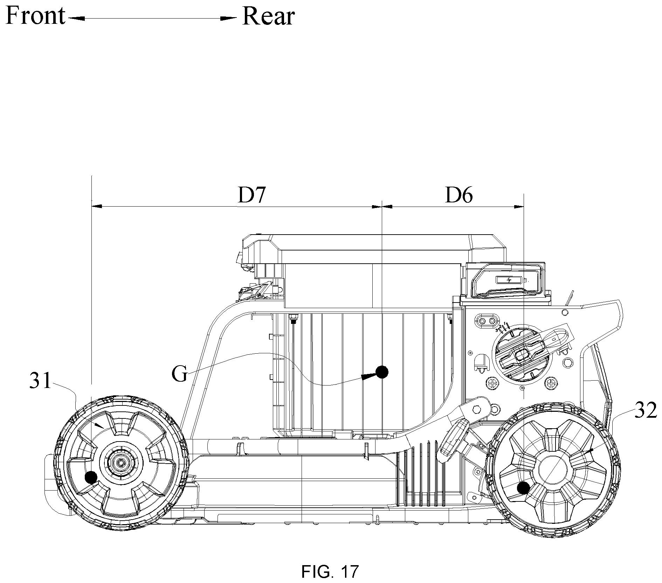

In some examples, as shown in FIG. 17, the distance D6 between the center of gravity G of the battery pack 20 and a plane corresponding to the rotation center of the rear walking wheel assembly 32 is less than or equal to 300 mm. The plane extends along the up and down direction of the mower 100 and passes the rotation center of the rear walking wheel assembly 32. The rotation center of the rear walking wheel assembly 32 refers to the rotation center of the axle of the rear walking wheel assembly 32. Since the height of the rear walking wheel assembly 32 needs to be adjusted during the use of the mower 100, the axle of the rear walking wheel assembly 32 rotates around a rotating shaft for adjusting the height of the rear walking wheel assembly 32. The distance D7 between the center of gravity G of the battery pack 20 and a plane corresponding to the rotation center of the front walking wheel assembly 31 is greater than or equal to 400 mm. The plane extends along the up and down direction of the mower 100 and passes the rotation center of the front walking wheel assembly 31. The rotation center of the front walking wheel assembly 31 refers to the rotation center of the axle of the front walking wheel assembly 31. Since the height of the front walking wheel assembly 31 needs to be adjusted during the use of the mower 100, the axle of the front walking wheel assembly 31 rotates around a rotating shaft for adjusting the height of the front walking wheel assembly 31. That is, the center of gravity G of the battery pack 20 is closer to the rear end in the front and rear direction, thereby causing the overall center of gravity of the mower 100 to be closer to the rear end. When the user controls the mower 100 to turn or move, it can be relatively convenient to press down the mower 100 through the handle assembly 11 to turn the mower 100. In this case, since the center of gravity G of the mower 100 is closer to the rear end and the overall weight of the mower 100 is relatively light, a force for raising the front wheels of the mower 100 is relatively small. It can be relatively easy for the user to press down the mower 100 behind the mower 100 so as to raise the front wheels of the mower 100. The force for raising the front wheels of the mower 100 is less than or equal to 150 N.

Optionally, the front walking wheel assembly 31 of the mower 100 may include omni wheels or Mecanum wheels. The rear walking wheel assembly 32 of the mower is controlled by two electric motors separately. That is, one of the two electric motors controls the left walking wheel in the rear walking wheel assembly 32, and the other one of the two electric motors controls the right walking wheel in the rear walking wheel assembly 32. Thus, the left and right walking wheels are controlled to generate a speed difference such that the mower 100 is controlled to turn.

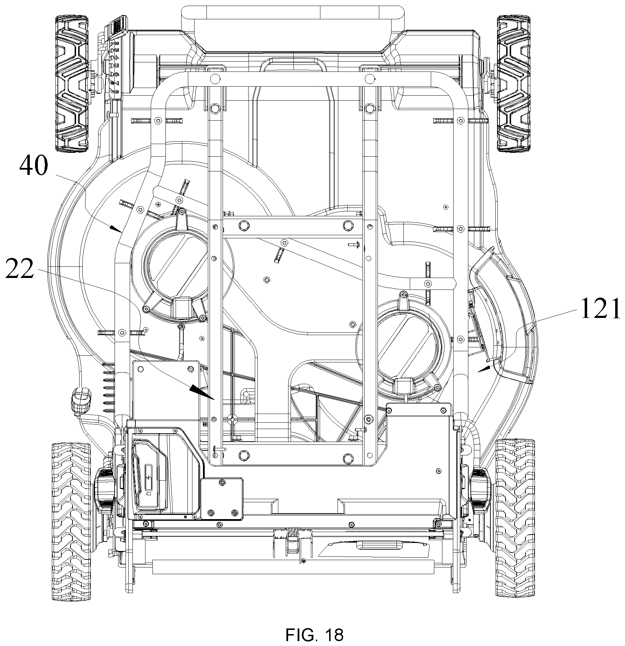

In some examples, as shown in FIGS. 13 and 18, the mower 100 further includes reinforcement members 40. The reinforcement members 40 are disposed on the upper side of the housing assembly 121 and cover the housing assembly 121. The multiple reinforcement members 40 extend along the front and rear direction of the mower 100 and the left and right direction of the mower 100 to ensure that the housing assembly 121 is less prone to deformation, thereby improving the overall strength of the mower 100. As shown in FIGS. 13 and 18, the reinforcement members 40 also include a reinforcement member 40 disposed at the front end of the mower 100. Thus, when the mower 100 moves forwards and collides with a foreign object, it can be ensured that the housing assembly 121 is protected from being damaged due to the collision. In addition, the battery pack holder 22 of the battery pack 20 may also be used as a reinforcement member 40 of the mower 100. When the mower 100 is subjected to a rollover, the reinforcement member 40 (that is, the battery pack holder 22) protects both the battery pack compartment 21 and the mower 100. Optionally, the reinforcement members 40 may be made of metal. Optionally, the reinforcement members 40 may be made of hollow metal. Optionally, the reinforcement members 40 may be made of plastics.

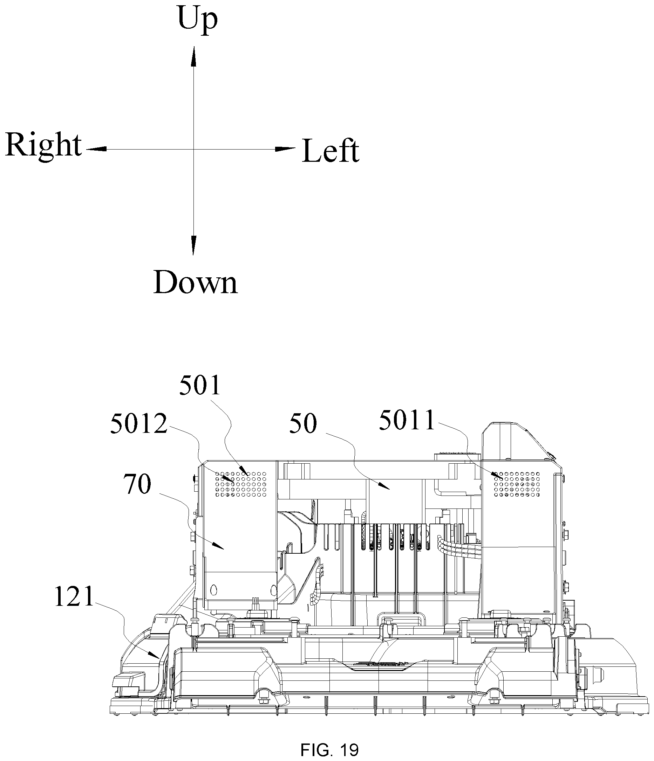

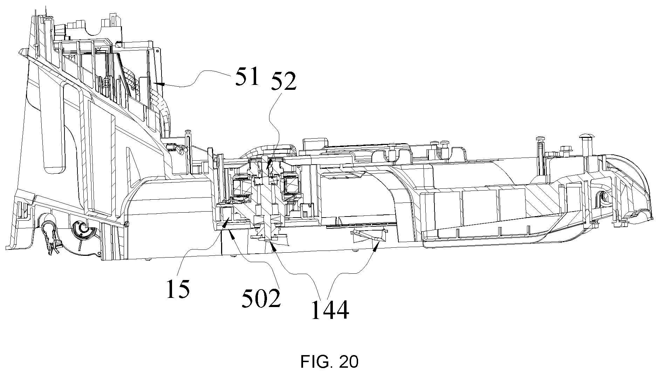

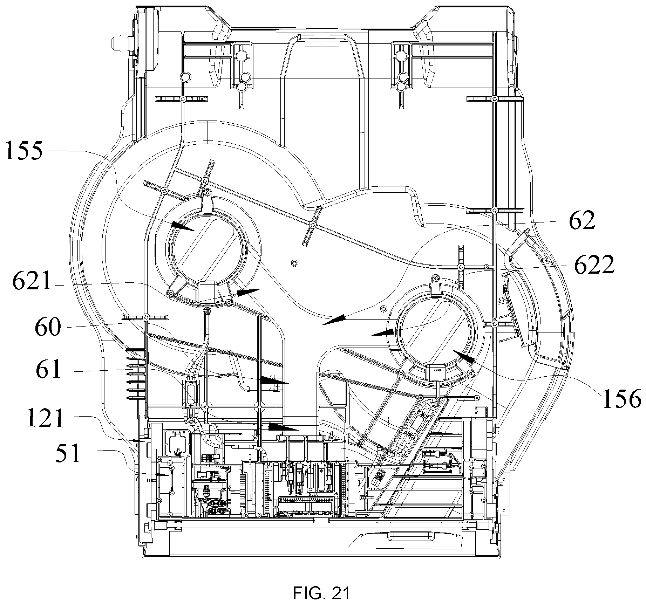

As shown in FIGS. 19 and 20, the housing assembly 121 is formed with an accommodating space 50, heat dissipation airflow inlets 501, and a heat dissipation airflow outlet 502. The heat dissipation airflow inlets 501 and the heat dissipation airflow outlet 502 are each capable of communicating with the inside and outside of the accommodating space 50. The accommodating space 50 includes a first accommodating space 51 and a second accommodating space 52. Electronic components are disposed in the first accommodating space 51. The second accommodating space 52 includes at least two independent accommodating cavities 15. The drive assembly 14 includes at least two electric motors that are disposed in different accommodating cavities 15, respectively. As shown in FIG. 21, the mower 100 further includes a heat dissipation channel 60. A first end of the heat dissipation channel 60 is connected to the first accommodating space 51. A second end of the heat dissipation channel 60 includes at least one connecting end. The at least one connecting end is connected to at least one of the at least two accommodating cavities 15 separately. Thus, when the mower 100 is in operation, heat dissipation airflows flow in through the heat dissipation airflow inlets 501. The heat dissipation airflows then flow through the electronic components in the first accommodating space 51 and the drive assembly 14 in the second accommodating space 52. Afterwards, the heat dissipation airflows flow out through the heat dissipation airflow outlet 502.

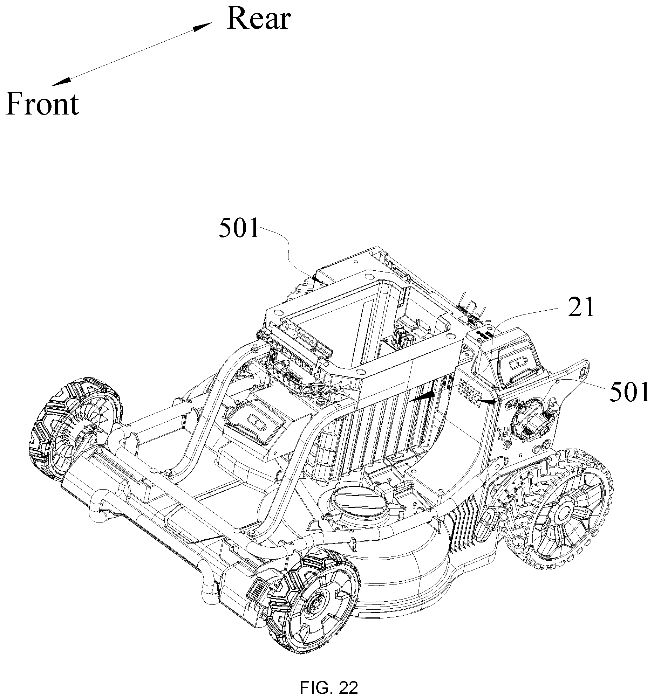

As shown in FIG. 19, the mower 100 further includes a cover plate 70 detachably mounted on the housing assembly 121. The heat dissipation airflow inlets 501 are provided on the cover plate 70. The heat dissipation airflow inlets 501 include a first heat dissipation airflow inlet 5011 and a second heat dissipation airflow inlet 5012. Both the first heat dissipation airflow inlet 5011 and the second heat dissipation airflow inlet 5012 are provided on the cover plate 70 and specifically on two sides of the cover plate 70. Multiple vents are included on the left side of the cover plate 70 and form the first heat dissipation airflow inlet 5011. Multiple vents are also included on the right side of the cover plate 70 and form the second heat dissipation airflow inlet 5012. The vents may be circular. In this case, the diameter of each vent is greater than or equal to 3 mm and less than or equal to 10 mm. Thus, the heat dissipation airflows enter more effectively through the heat dissipation airflow inlets 501. In addition, the vents may be in other shapes. The shape of each of the vents is not limited in the present application. As shown in FIG. 22, the orientation of each of the heat dissipation airflow inlets 501 is forward, and the heat dissipation airflow inlets 501 are provided on two sides of the battery pack 20 relative to the battery pack 20, respectively. Thus, when the mower 100 is in use, the heat dissipation airflows can flow into the first accommodating space 51 from the heat dissipation airflow inlets 501 on the two sides of the battery pack 20 without being blocked by the battery pack 20.

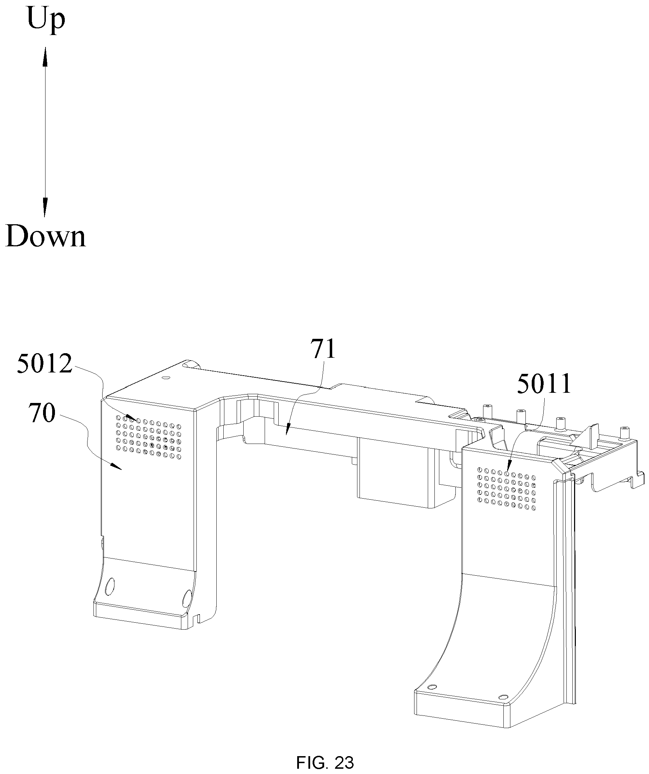

As shown in FIG. 23, a guide channel 71 is provided on the lower side of the cover plate 70, that is, the side of the cover plate 70 that faces the first accommodating space 51. Thus, after entering through the heat dissipation airflow inlets 501 on the cover plate 70, the heat dissipation airflows may enter the first accommodating space 51 along the guide channel 71. After entering through the first heat dissipation airflow inlet 5011 and the second heat dissipation airflow inlet 5012, the heat dissipation airflows flow towards the center of the mower 100 along the guide channel 71.

In some examples, after entering the first accommodating space 51, the heat dissipation airflows dissipate heat from the electronic components in the first accommodating space 51. The electronic components include an electric motor control board electrically connected to the electric motors and a power control board electrically connected to the battery pack 20. The heat dissipation airflows sequentially flow through the power control board and the electric motor control board. Optionally, since the at least two electric motors are provided, the number of electric motor control boards may be the same as the number of the electric motors, that is, at least two electric motor control boards may be provided. Optionally, one electric motor control board may be provided and configured to control the at least two electric motors. Optionally, the electric motor control board and the power control board each include heat sinks disposed along the up and down direction of the mower 100. When flowing through the power control board and the electric motor control board, the heat dissipation airflows flow from top to bottom. The direction in which the heat dissipation airflows flow is consistent with the direction in which the heat sinks are disposed. Thus, the heat dissipation effect of the heat dissipation airflows on the power control board and the electric motor control board can be improved.

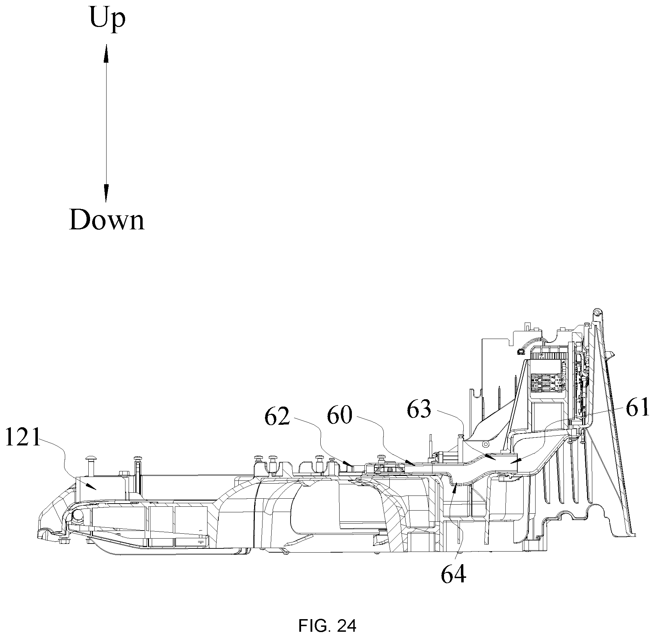

In some examples, after flowing through the electronic components, the heat dissipation airflows flow towards the second accommodating space 52 through the heat dissipation channel 60. As shown in FIG. 24, the heat dissipation channel 60 is independent of the housing assembly 121. The heat dissipation channel 60 is formed by parts that are formed separately from the housing assembly 121 and is disposed on the upper side of the housing assembly 121. A heat dissipation channel entrance 61 is at the first end of the heat dissipation channel 60. The heat dissipation channel entrance 61 is connected to the housing assembly 121 and used for receiving the heat dissipation airflows that flow out of the first accommodating space 51. At least two heat dissipation channel exits 62 are at the second end of the heat dissipation channel 60. Optionally, the number of exits is the same as the number of accommodating cavities 15 (or the number of electric motors). Each exit is connected to a respective accommodating cavity 15. As shown in FIG. 21, two accommodating cavities 15 (two electric motors) are used as an example in the present application. The first electric motor 141 is disposed in the first accommodating cavity 155, and the second electric motor 142 is disposed in the second accommodating cavity 156. Then, two heat dissipation channel exits 62 are provided. A first exit 621 is connected to the first accommodating cavity 155, and a second exit 622 is connected to the second accommodating cavity 156. Optionally, the number of exits may be different from the number of accommodating cavities 15, which is not limited in the present application.

As shown in FIG. 20, the mower 100 further includes fans 144 connected to the electric motors. When the mower 100 is in operation, the electric motors rotate to drive the fans 144 to rotate. Thus, the heat dissipation airflows flow from the heat dissipation channel entrance 61 towards the heat dissipation channel exits 62 and then enter the second accommodating space 52. The first electric motor 141 rotates to drive a respective fan 144 to rotate. The heat dissipation airflows flow from the heat dissipation channel entrance 61 towards the first exit 621 and then flow into the first accommodating cavity 155 through the first exit 621 to dissipate heat from the first electric motor 141. The second electric motor 142 rotates to drive a respective fan 144 to rotate. The heat dissipation airflows flow from the heat dissipation channel entrance 61 towards the second exit 622 and then flow into the second accommodating cavity 156 through the second exit 622 to dissipate heat from the second electric motor 142. Therefore, the heat dissipation airflows first dissipate the heat from the electronic components in the first accommodating space 51 and then dissipate the heat from the drive assembly 14 in the second accommodating space 52. The heat dissipation airflow outlet 502 specifically communicates with the inside and outside of the second accommodating space 52. That is, after dissipating the heat from the drive assembly 14, the heat dissipation airflows flow out of the second accommodating space 52 due to the rotation of the fan 144. The heat dissipation airflows flow out towards the lower side of the mower 100 and flow out of the inside of the mower 100. In addition, due to the rotation of the fans 144, the heat dissipation airflows flow in through the heat dissipation airflow inlets 501, flows along the guide channel 71, and flows through the electronic components in the first accommodating space 51.

In some examples, as shown in FIG. 24, the heat dissipation channel 60 includes a cooling region 63 disposed between the heat dissipation channel entrance 61 and the heat dissipation channel exits 62. Thus, the heat dissipation airflows can be cooled after dissipating the heat from the electronic components, thereby better dissipating the heat from the drive assembly 14. In some examples, a drain hole 64 is included on the lower side of the heat dissipation channel 60 and disposed on the lower side between the heat dissipation channel entrance 61 and the heat dissipation channel exits 62. Thus, water entering the heat dissipation channel 60 can be drained through the drain hole 64 so that the water is prevented from entering the drive assembly 14.

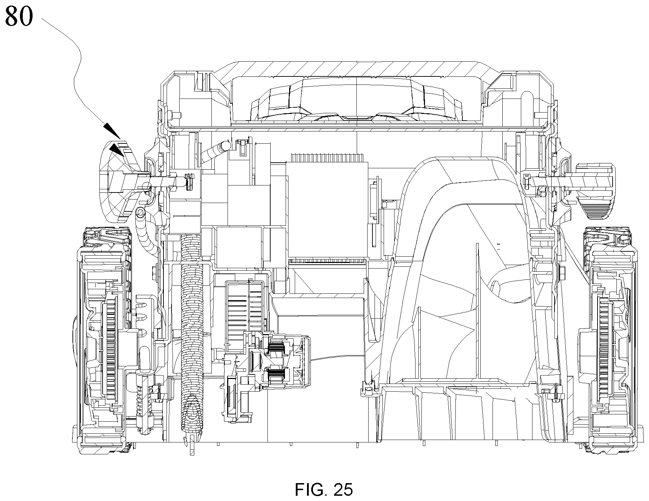

As shown in FIG. 25, to facilitate the operation of the mower 100 by users of different heights, the mower 100 further includes a handle height adjustment mechanism 80. The handle height adjustment mechanism 80 includes an external toothed disc, an internal toothed disc, and a knob. The internal toothed disc is disposed on the body 12. The external toothed disc rotates in mesh with the internal toothed disc. The knob passes through the handle tube and is movably connected to the external toothed disc.

In some examples, a support plate is further disposed between the internal toothed disc and the body 12. The internal toothed disc is connected to the support plate through a connector. The support plate is marked with a height position scale. The external toothed disc is provided with indicator marks. Through the correspondence between the indicator marks and the numbers on the height position scale, the user can clearly know the current height position of the handle tube.

In some examples, a Hall element is disposed on the internal toothed disc, and an annular magnet is disposed on the external toothed disc. The dimension of the annular magnet is greater than the dimension of the Hall element, and the annular magnet has a certain length. Optionally, the length of the annular magnet depends on the condition that the Hall element can sense the annular magnet when one of the indicator marks corresponds to a respective one of the numbers on the height position scale.

When the handle tube is at a height position corresponding to one of the numbers on the height position scale, the Hall element can sense the annular magnet, and the mower 100 can start normally. When the handle tube is at a height position not corresponding to any one of the numbers on the height position scale, the annular magnet is distant from and cannot be sensed by the Hall element, and the mower 100 cannot start normally. Thus, when the handle tube of the mower 100 is in a folded state or another non-working state in which the indicator marks do not correspond to the numbers on the height position scale, the mower 100 cannot start, thereby improving safety in the use of the mower 100.

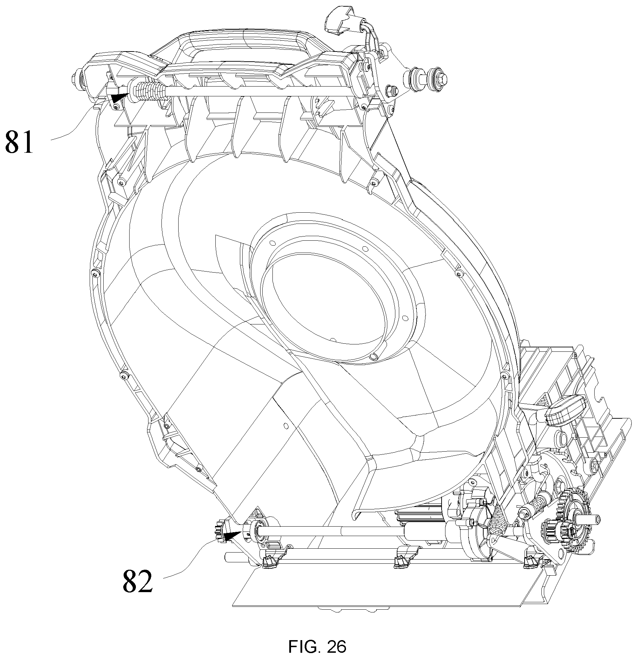

As shown in FIG. 26, the mower 100 includes a front height adjustment mechanism 81 and a rear height adjustment mechanism 82. The front height adjustment mechanism 81 is used for adjusting the height of the front portion of the body 12 while the rear height adjustment mechanism 82 is used for adjusting the height of the rear portion of the body 12. Optionally, the mower 100 may be a dual-blade mower or a single-blade mower. The type of mower is not limited in the present application.

In some examples, the front height adjustment mechanism 81 includes a first elastic member and a front height adjustment rotating shaft. One end of the first elastic member is connected to the body 12, and the other end of the first elastic member is connected to the front height adjustment rotating shaft. When the height of the front portion of the body 12 is adjusted, the deck of the body 12 falls under the action of gravity. The elastic force of the first elastic member can counteract the gravity. Therefore, the user only needs to gently hold the deck to adjust the height, thereby saving time and effort. In some examples, the first elastic member is a torsion spring. The torsion spring is sleeved on the front height adjustment rotating shaft. One end of the torsion spring abuts against the deck of the body 12, and the other end of the torsion spring is connected to a fixed plate fixed on the front height adjustment rotating shaft.

In some examples, the rear height adjustment mechanism 82 includes a second elastic member and a rear height adjustment rotating shaft. One end of the second elastic member is connected to the body 12, and the other end of the second elastic member is connected to the rear height adjustment rotating shaft. When the height of the rear portion of the body 12 is adjusted, the deck of the body 12 falls under the action of gravity. The elastic force of the second elastic member can counteract the gravity. Therefore, the user only needs to gently hold the deck to adjust the height, thereby saving time and effort. In some examples, the second elastic member is a tension spring. One end of the tension spring is connected to a tension spring hook on the deck of the body 12, and the other end of the tension spring is fixedly connected to the rear height adjustment rotating shaft. Optionally, to improve the cutting efficiency of the mower and prevent the mower 100 in operation from being stuck by the grass, the whole body 12 may be adjusted to a higher position through the front height adjustment mechanism 81 and the rear height adjustment mechanism 82. That is, the chassis 122 of the mower 100 is more distant from the ground. Additionally, the front end of the housing assembly 121 may be made thinner in the up and down direction. Thus, when the mower 100 moves forward, the contact area between the mower 100 and the grass is relatively small, resulting in less resistance.

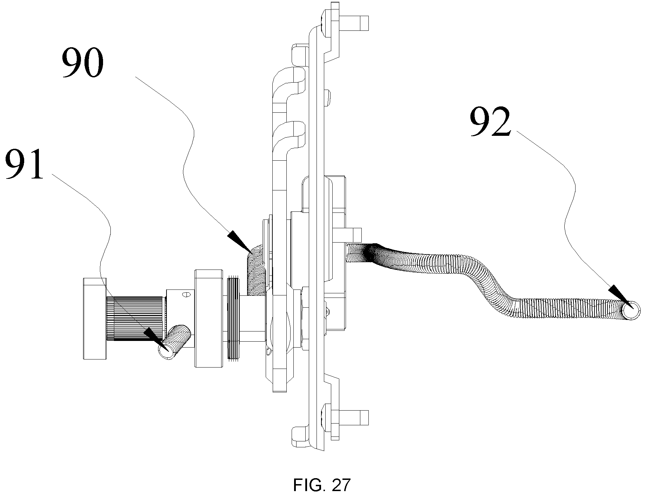

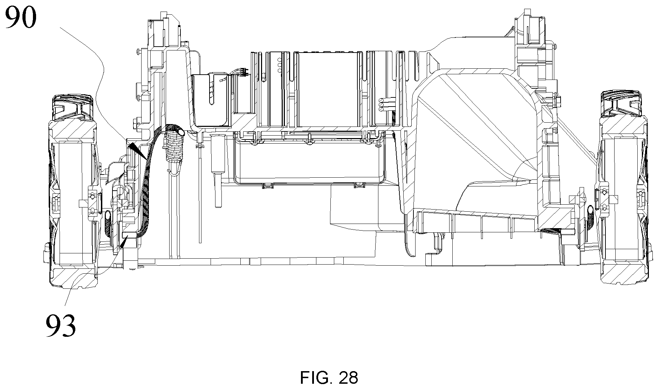

In some examples, the rear walking wheel assembly 32 of the mower 100 is controlled, through a hub motor, to walk or turn. The hub motor is connected to a corresponding hub motor control board through a hub motor wire harness 90 such that the hub motor is controlled. As shown in FIG. 27, the hub motor wire harness 90 includes a first end 91 and a second end 92. The first end 91 is configured to be connected to the hub motor, and the second end 92 is configured to be connected to the hub motor control board. As shown in FIG. 28, the hub motor wire harness 90 passes through a connecting hole 93 to connect the hub motor control board to the hub motor. Optionally, since the height of the rear portion of the mower 100 may be adjusted through the rear height adjustment mechanism 82, the connecting hole 93 is a rotation center corresponding to the rear height adjustment mechanism 82 in a height adjustment process so that the hub motor wire harness 90 is prevented from twisting and probably being broken during the use of the rear height adjustment mechanism 82. Thus, since the rear height adjustment mechanism 82 always performs the adjustment around the rotation center, the hub motor wire harness 90 is not twisted. Optionally, the hub motor wire harness 90 may be wrapped with a spring wire to protect the hub motor wire harness 90 and reduce wear and tear on the hub motor wire harness 90. Optionally, a bearing is mounted in the hub motor. The hub motor wire harness 90 passes through the bearing to connect the hub motor to the hub motor control board. The bearing helps reduce wear and tear on the hub motor wire harness 90.

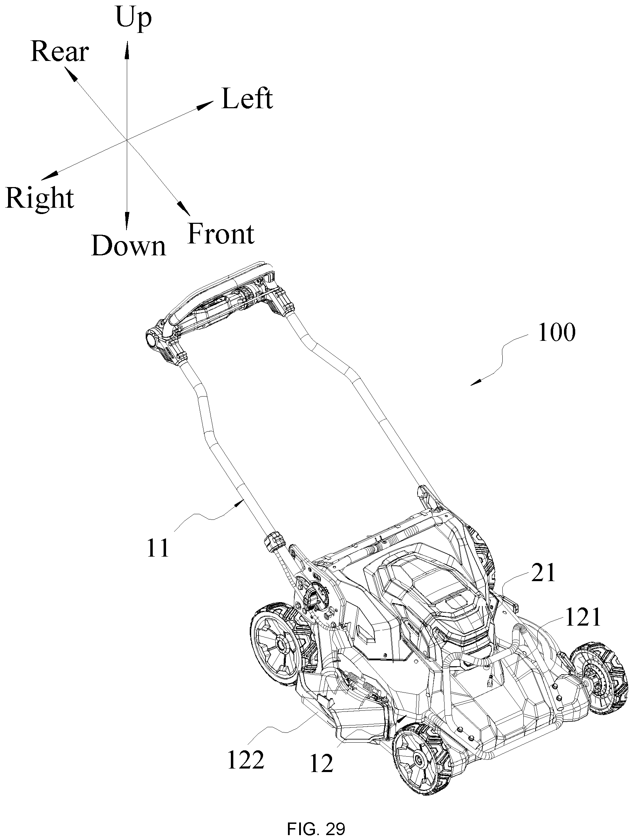

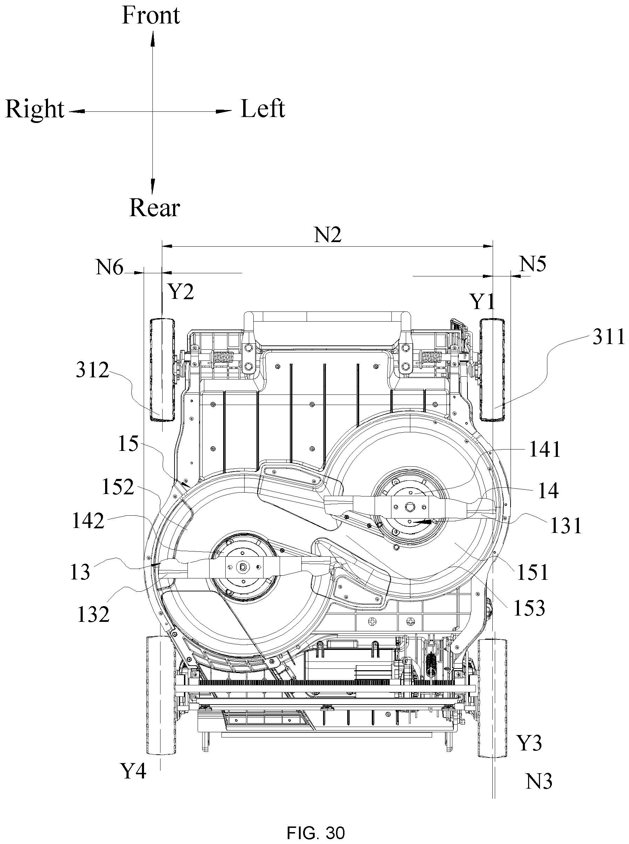

FIG. 29 shows a mower 100 according to another example. Similarly, the mower 100 includes a handle assembly 11 and a body 12. The body 12 includes a housing assembly 121 and a chassis 122. As shown in FIG. 30, the mower 100 further includes a cutting element 13 and a drive assembly 14. At least part of the cutting element 13 is accommodated in the chassis 122. The cutting element 13 is used for performing a cutting function and includes a first blade 131 and a second blade 132. The drive assembly 14 is configured to drive the cutting element 13 to rotate and includes a first electric motor 141 and a second electric motor 142. The first electric motor 141 is configured to control the rotation of the first blade 131, and the second electric motor 142 is configured to control the rotation of the second blade 132. The chassis 122 is formed with an accommodating cavity 15 for accommodating at least part of the cutting element 13. A first cutting deck 151 and a second cutting deck 152 are disposed in the accommodating cavity 15. The first blade 131 is disposed in the first cutting deck 151, and the second blade 132 is disposed in the second cutting deck 152. The space formed between the upper end of the first cutting deck 151 and the housing assembly 121 communicates with the space formed between the upper end of the second cutting deck 152 and the housing assembly 121. That is, a communication region 153 is disposed between the first cutting deck 151 and the second cutting deck 152.

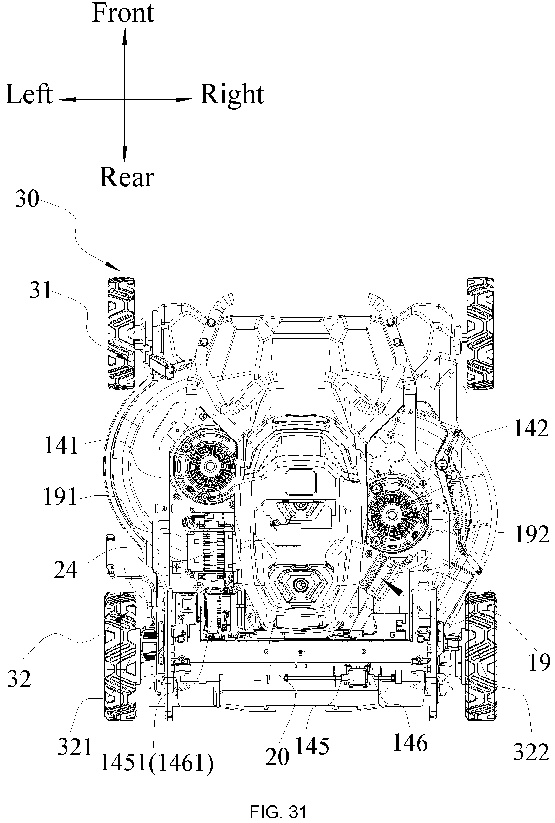

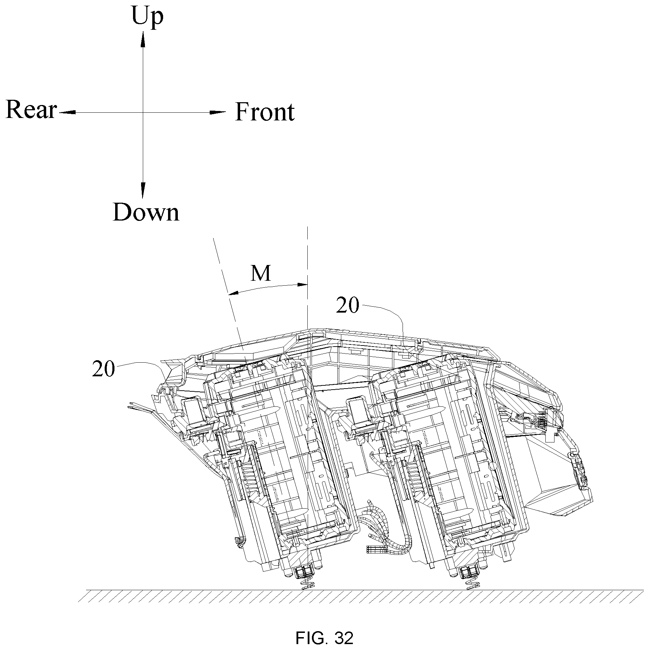

The mower 100 further includes a battery pack 20 and a battery pack compartment 21. The battery pack 20 is mounted at a position on the body 12 closer to the rear of the body 12 and is configured to power the drive assembly 14. The battery pack compartment 21 is used for accommodating the battery pack 20. The battery pack compartment 21 may be at least partially disposed on the housing assembly 121. The first electric motor 141 is disposed on the left side of the battery pack 20, and the second electric motor 142 is disposed on the right side of the battery pack 20. Two battery packs 20 may be provided and include the two battery packs shown in FIGS. 31 and 32. Alternatively, one battery pack 20 may be provided. Alternatively, more than two battery packs 20 may be provided. The number of battery packs is not limited in the present application.

As shown in FIG. 32, when mounted on the body 12, the battery packs 20 are longitudinally oblique backwards in the front and rear direction. Each of the battery packs 20 longitudinally oblique backwards forms an included angle M with a vertical plane perpendicular to a horizontal plane. The included angle M is greater than 0 degree and less than 90 degree. Optionally, the included angle M is 30 degree. Optionally, the included angle M is 45°. Optionally, the included angle M is 60 degree. Optionally, the included angle M is 75 degree. The battery packs 20 are configured to be longitudinally oblique backwards so that the weight of each of the battery packs 20 is mainly applied to the rear end of the mower 100.

As shown in FIG. 31, the mower 100 further includes electric motor control boards 19. The electric motor control boards 19 include a first electric motor control board 191 and a second electric motor control board 192. The first electric motor control board 191 is configured to control the first electric motor 141, and the second electric motor control board 192 is configured to control the second electric motor 142. The first electric motor control board 191 is disposed on the left side of each of the battery packs 20 and corresponds to the first electric motor 141. The second electric motor control board 192 is disposed on the right side of each of the battery packs 20 and corresponds to the second electric motor 142. Two independent electric motor control boards are configured to control the first electric motor 141 and the second electric motor 142, respectively. Thus, when one of the electric motor control boards is faulty, a fault can be located in time based on the electric motors, and then the electric motor control board is repaired or replaced, thereby reducing repair costs and difficulty.

Along the front and rear direction of the mower 100, the first electric motor control board 191 is disposed at the rear end of the first electric motor 141 and is connected to the first electric motor 141, and the second electric motor control board 192 is also disposed at the rear end of the second electric motor 142 and is connected to the second electric motor 142. Thus, the weight of each of the first electric motor control board 191 and the second electric motor control board 192 is applied to the rear end of the mower 100. The battery packs 20 are configured to be longitudinally oblique backwards. In addition, the first electric motor control board 191 is disposed at the rear end of the first electric motor 141, and the second electric motor control board 192 is disposed at the rear end of the second electric motor 142. Thus, the projection of the overall center of gravity of the mower 100 on the horizontal plane is within the range of the projections of the battery packs 20 on the horizontal plane. That is, the overall center of gravity of the mower 100 is closer to the rear. Thus, when the user controls the mower 100 to turn or move, it can be relatively convenient to press down the mower 100 through the handle assembly 11 to turn or move the mower 100. The use and operation of the user are facilitated.

In some examples, the minimum distance between the first electric motor 141 and the first electric motor control board 191 is greater than or equal to 0 mm and less than or equal to 120 mm. The minimum distance between the first electric motor 141 and the first electric motor control board 191 refers to the minimum spatial distance from the edge of the first electric motor 141 to the edge of the first electric motor control board 191, that is, the linear stereoscopic distance from the edge of the first electric motor 141 to the edge of the first electric motor control board 191. Optionally, the minimum distance between the first electric motor 141 and the first electric motor control board 191 is 20 mm. Optionally, the minimum distance between the first electric motor 141 and the first electric motor control board 191 is 35 mm. Optionally, the minimum distance between the first electric motor 141 and the first electric motor control board 191 is 64 mm. Optionally, the minimum distance between the first electric motor 141 and the first electric motor control board 191 is 92 mm.

In some examples, the minimum distance between the second electric motor 142 and the second electric motor control board 192 is greater than or equal to 0 mm and less than or equal to 120 mm. The minimum distance between the second electric motor 142 and the second electric motor control board 192 refers to the minimum spatial distance from the edge of the second electric motor 142 to the edge of the second electric motor control board 192. Optionally, the minimum distance between the second electric motor 142 and the second electric motor control board 192 is 15 mm. Optionally, the minimum distance between the second electric motor 142 and the second electric motor control board 192 is 35 mm. Optionally, the minimum distance between the second electric motor 142 and the second electric motor control board 192 is 44 mm. Optionally, the minimum distance between the second electric motor 142 and the second electric motor control board 192 is 75 mm. Optionally, the minimum distance between the second electric motor 142 and the second electric motor control board 192 is 110 mm.

Optionally, the minimum distance between the first electric motor 141 and the first electric motor control board 191 and the minimum distance between the second electric motor 142 and the second electric motor control board 192 may be the same or different, which is not limited in the present application. A relatively short distance between each of the electric motors and a respective one of the electric motor control boards causes a respective connecting wire to be relatively short. Thus, the costs are saved, and it is convenient to repair a faulty electric motor control board.

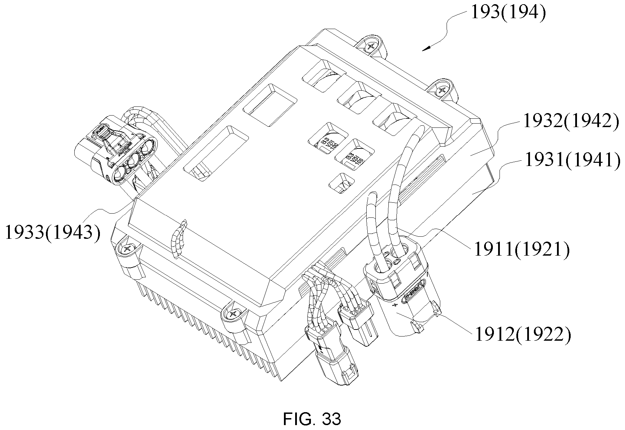

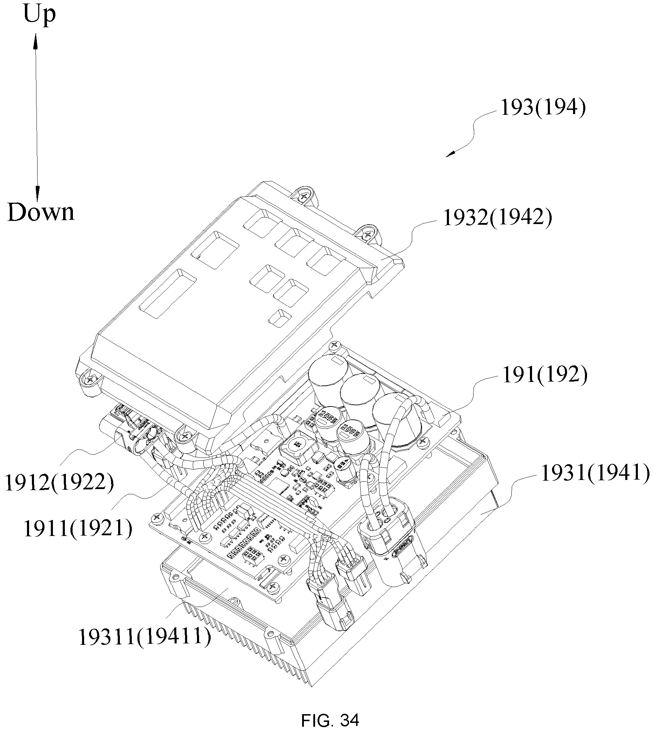

As shown in FIGS. 33 and 34, the mower 100 further includes a first control board protector 193 and a second control board protector 194. The first control board protector 193 is used for enclosing at least part of the first electric motor control board 191, thereby protecting electronic elements and wire harnesses 1911 on the first electric motor control board 191. The second control board protector 194 is used for enclosing at least part of the second electric motor control board 192, thereby protecting electronic elements and wire harnesses 1921 on the second electric motor control board 192. Optionally, the first control board protector 193 and the second control board protector 194 may have the same shape and size. Optionally, the first control board protector 193 and the second control board protector 194 may be completely different from each other. In the present application, specific description is performed using the example in which the first control board protector 193 and the second control board protector 194 have the same shape and size.

As shown in FIGS. 33 and 34, the first control board protector 193 includes a first protective case 1931 and a first protective cover 1932. The first protective case 1931 is used for accommodating the first electric motor control board 191. The first protective cover 1932 is matched with the first protective case 1931. The first protective case 1931 includes an opening 19311, and the first protective cover 1932 covers the opening 19311 of the first protective case 1931. Similarly, the second control board protector 194 includes a second protective case 1941 and a second protective cover 1942. The second protective case 1941 is used for accommodating the second electric motor control board 192. The second protective cover 1942 is matched with the first protective case 251. The second protective case 1941 includes an opening 19411, and the second protective cover 1942 covers the opening 19411 of the second protective case 1941.

The first control board protector 193 includes wire lead-out openings 1933 for leading out the wire harnesses 1911 electrically coupled to the first electric motor control board 191. Thus, at least one wire harness 1911 can form a first wire harness connecting end 1912 and is electrically coupled to the first electric motor 141 through the first wire harness connecting end 1912. Optionally, the wire lead-out openings 1933 may be provided on the first protective case 1931. Optionally, the wire lead-out openings 1933 may be provided on the first protective cover 1932. Optionally, the wire lead-out openings 1933 may be provided on both the first protective case 1931 and the first protective cover 1932.

The second control board protector 194 includes a wire lead-out opening 1943 for leading out the wire harnesses 1921 electrically coupled to the second electric motor control board 192. Thus, at least one wire harness 1921 can form a second wire harness connecting end 1922 and is electrically coupled to the second electric motor 142 through the second wire harness connecting end 1922. Optionally, the wire lead-out openings 1943 may be provided on the second protective case 1941. Optionally, the wire lead-out openings 1943 may be provided on the second protective cover 1942. Optionally, the wire lead-out openings 1943 may be provided on both the second protective case 1941 and the second protective cover 1942.

The first control board protector 193 and the second control board protector 194 are provided. Thus, not only can both the first electric motor control board 191 and the second electric motor control board 192 be protected, but also the wire harnesses 1911 on the first electric motor control board 191 and the wire harnesses 1921 on the second electric motor control board 192 can be confined and positioned. In addition, it is convenient to detach and mount the first electric motor control board 191 and the second electric motor control board 192.

In some examples, the minimum distance between the first electric motor 141 and the first control board protector 193 is greater than or equal to 0 mm and less than or equal to 120 mm. The minimum distance between the first electric motor 141 and the first control board protector 193 refers to the minimum spatial distance from the edge of the first electric motor 141 to the edge of the first control board protector 193. Optionally, the minimum distance between the first electric motor 141 and the first control board protector 193 is 60 mm. Optionally, the minimum distance between the first electric motor 141 and the first control board protector 193 is 105 mm.

In some examples, the minimum distance between the second electric motor 142 and the second control board protector 194 is greater than or equal to 0 mm and less than or equal to 120 mm. The minimum distance between the second electric motor 142 and the second control board protector 194 refers to the minimum spatial distance from the edge of the second electric motor 142 to the edge of the second control board protector 194. Optionally, the minimum distance between the second electric motor 142 and the second control board protector 194 is 50 mm. Optionally, the minimum distance between the second electric motor 142 and the second control board protector 194 is 113 mm.

In some examples, as shown in FIG. 31, the mower 100 further includes a battery pack control board 24. The battery pack control board 24 is disposed on the left or right side of the battery packs 20, connected to the battery packs 20, and configured to control the battery packs 20. The mower 100 further includes a battery pack control board protector. The battery pack control board protector is used for enclosing at least part of the battery pack control board 24, thereby protecting electronic elements and wire harnesses on the battery pack control board 24. Optionally, the battery pack control board protector includes a protective case for the battery pack control board and a protective cover for the battery pack control board. The specific structure of the battery pack control board protector is the same as that of the preceding first control board protector 193 and that of the preceding second control board protector 194. The details are not repeated here.

As shown in FIG. 31, the mower 100 further includes walking wheel assemblies 30. The walking wheel assemblies 30 include a front walking wheel assembly 31 and a rear walking wheel assembly 32. The mower 100 further includes a third electric motor 145 and a fourth electric motor 146. The third electric motor 145 and the fourth electric motor 146 drive the left rear walking wheel 321 of the rear walking wheel assembly 32 and the right rear walking wheel 322 of the rear walking wheel assembly 32, respectively. In some examples, the third electric motor 145 has a respective third electric motor control board 1451 and a respective third control board protector. The third control board protector is used for enclosing at least part of the third electric motor control board 1451, thereby protecting electronic elements and wire harnesses on the third electric motor control board 1451. The fourth electric motor 146 has a respective fourth electric motor control board 1461 and a respective fourth control board protector. The fourth control board protector is used for enclosing at least part of the fourth electric motor control board 1461, thereby protecting electronic elements and wire harnesses on the fourth electric motor control board 1461. The third electric motor control board 1451 and the fourth electric motor control board 1461 are each disposed at the front end of the third electric motor 145 and the front end of the fourth electric motor 146. The specific structure of the third control board protector and the specific structure of the fourth control board protector are the same as that of the preceding first control board protector 193 and that of the preceding second control board protector 194. The details are not repeated here. In some examples, the third electric motor 145 and the fourth electric motor 146 share the same electric motor control board. This electric motor control board is provided with a respective control board protector. The specific position of the electric motor control board and the specific structure of the control board protector are the same as those described above. The details are not repeated here.

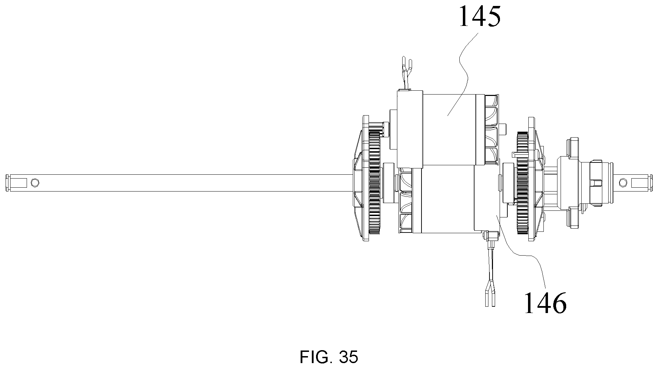

In some examples, as shown in FIG. 31, the third electric motor 145 and the fourth electric motor 146 are disposed between the left rear walking wheel 321 and the right rear walking wheel 322. Optionally, the third electric motor 145 and the fourth electric motor 146 may be configured to face away from each other, as shown in FIG. 31. In this case, the third electric motor 145 and the fourth electric motor 146 are collinear. Optionally, the third electric motor 145 and the fourth electric motor 146 may be configured to face each other, as shown in FIG. 35. In this case, the third electric motor 145 and the fourth electric motor 146 are staggered. FIG. 31 shows an example in which the third electric motor 145 and the fourth electric motor 146 are configured to face away from each other. FIG. 35 shows an example in which the third electric motor 145 and the fourth electric motor 146 are configured to face each other. A specific form in which the two electric motors are configured to face away from or face each other is not limited in the present application.

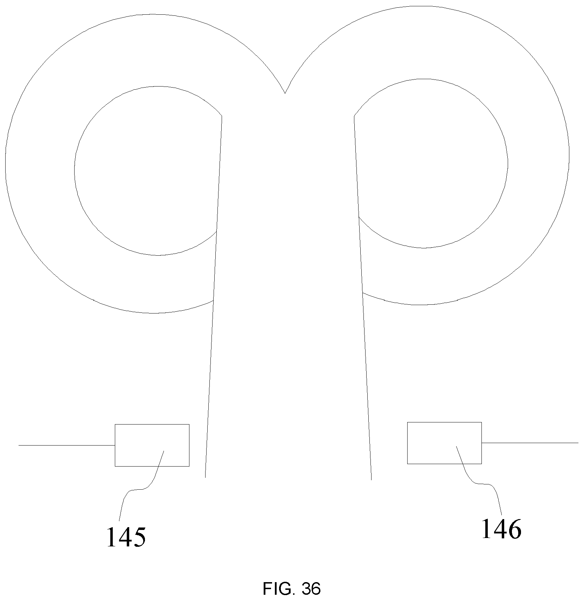

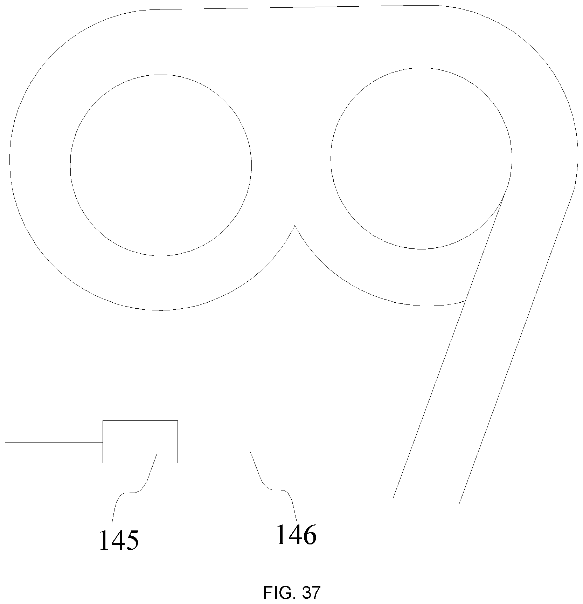

In some examples, the specific position of the third electric motor 145 and the specific position of the fourth electric motor 146 may be configured based on a grass discharge opening of the mower 100. Optionally, as shown in FIG. 36, when the grass discharge opening of the mower 100 is located directly behind the middle of the whole machine, the third electric motor 145 and the fourth electric motor 146 may be separately disposed on two sides of the grass discharge opening. In this case, the limitation is not imposed that the third electric motor 145 and the fourth electric motor 146 are configured to face away from or face each other. Optionally, as shown in FIG. 37, when the grass discharge opening of the mower 100 is located on one side of the whole machine, the third electric motor 145 and the fourth electric motor 146 may be disposed on the other side of the whole machine relative to the grass discharge opening. In this case, the limitation is not imposed that the third electric motor 145 and the fourth electric motor 146 are configured to face away from or face each other.

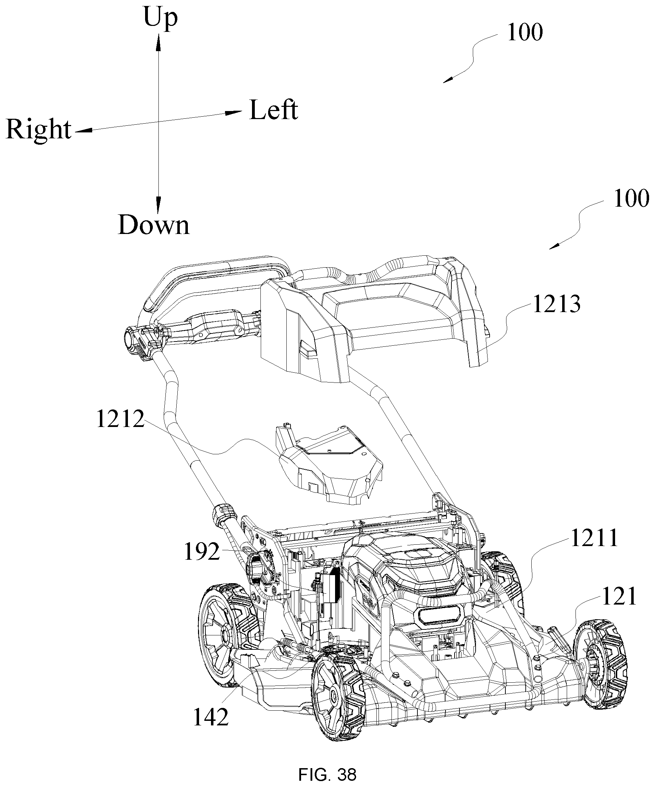

In some examples, as shown in FIG. 38, the housing assembly 121 includes a first electric motor cover 1211 and a second electric motor cover 1212. The first electric motor cover 1211 covers the first electric motor 141 to protect and shield the first electric motor 141. The first electric motor cover 1211 may be opened to expose the first electric motor 141. The second electric motor cover 1212 covers the second electric motor 142 to protect and shield the second electric motor 142. The second electric motor cover 1212 may be opened to expose the second electric motor 142.

Thus, the first electric motor cover 1211 and the second electric motor cover 1212 can prevent foreign objects such as external dust from entering the first electric motor 141 or the second electric motor 142 to affect the service life of the first electric motor 141 or the second electric motor 142. Thus, the fault rates of the first electric motor 141 and the second electric motor 142 are reduced. In addition, when the first electric motor 141 or the second electric motor 142 is faulty, the first electric motor cover 1211 or the second electric motor cover 1212 are opened such that operations such as repair can be conveniently and quickly performed on the first electric motor 141 or the second electric motor 142. Thus, the first electric motor 141 and the second electric motor 142 have great serviceability.

As shown in FIG. 38, the housing assembly 121 further includes a third cover 1213 at the rearmost end of the housing assembly 121. The third cover 1213 may cover part of the first electric motor cover 1211 or part of the second electric motor cover 1212. The third cover 1213 also covers the first electric motor control board 191 and the second electric motor control board 192. That is, the third cover 1213 covers the first control board protector 193 and the second control board protector 194. Thus, after the third cover 1213 is detached, operations such as repair can be conveniently and quickly performed on the first electric motor control board 191 or the second electric motor control board 192 based on the first control board protector 193 or the second control board protector 194. It is unnecessary to detach the whole housing assembly 121, and other assemblies are not affected.

The third cover 1213 may also cover the battery pack control board 24 (that is, the third cover 1213 may cover the battery pack control board protector). The third cover 1213 may also cover the third electric motor control board 1451 of the third electric motor 145 and the fourth electric motor control board 1461 of the fourth electric motor 146. That is, the third cover 1213 may also cover the third control board protector and the fourth control board protector. Alternatively, the third cover 1213 may cover the corresponding electric motor control board shared by the third electric motor 145 and the fourth electric motor 146 (that is, the third cover 1213 may cover the control board protector). Additionally, the third cover 1213 may also cover other electronic elements in the mower 100. Thus, it is convenient to repair the respective battery pack control board 24 when at least one of the battery packs 20 is faulty and repair the corresponding electric motor control board when the third electric motor 145 and the fourth electric motor 146 are faulty. In this manner, the third cover 1213 is opened, and all the control boards that the mower 100 needs to use can be repaired conveniently and quickly.

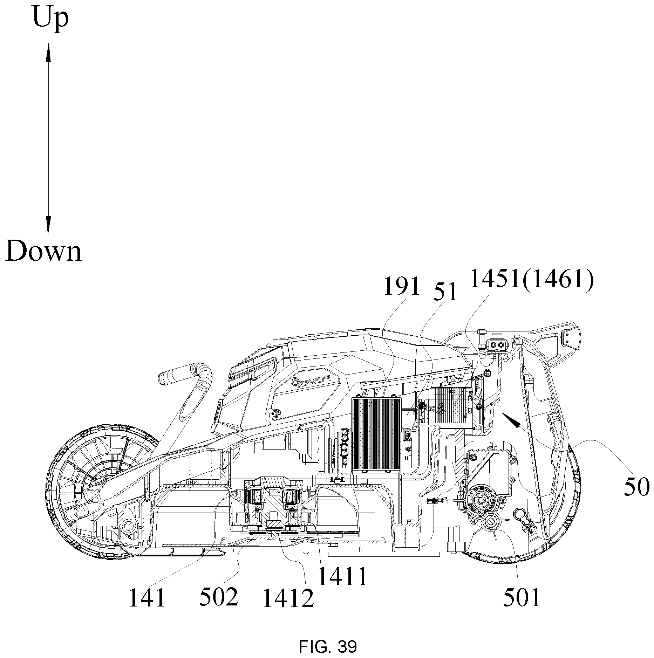

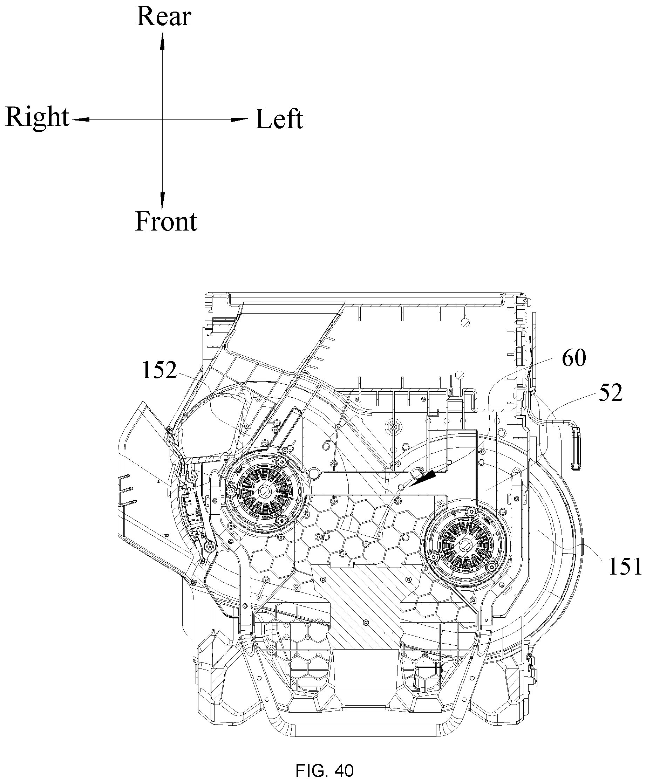

In some examples, the housing assembly 121 is formed with an accommodating space 50, heat dissipation airflow inlets 501, and a heat dissipation airflow outlet 502. The heat dissipation airflow inlets 501 and the heat dissipation airflow outlet 502 are each capable of communicating with the inside and outside of the accommodating space 50. The accommodating space 50 includes a first accommodating space 51 and a second accommodating space 52. Electronic components are disposed in the first accommodating space 51. The second accommodating space 52 includes the first cutting deck 151 and the second cutting deck 152. The first electric motor 141 and the second electric motor 142 are disposed in the first cutting deck 151 and the second cutting deck 152, respectively. As shown in FIGS. 39 and 40, the mower 100 also includes a heat dissipation channel 60. A first end of the heat dissipation channel 60 is connected to the first accommodating space 51. A second end of the heat dissipation channel 60 includes at least two connecting ends that are connected to the first cutting deck 151 and the second cutting deck 152, respectively. Thus, when the mower 100 is in operation, heat dissipation airflows flow in through the heat dissipation airflow inlets 501. The heat dissipation airflows then flow through the electronic components in the first accommodating space 51, the first electric motor 141 in the first cutting deck 151, and the second electric motor 142 in the second cutting deck 152. Afterwards, the heat dissipation airflows flow out through the heat dissipation airflow outlet 502.

The heat dissipation airflow inlets 501 include a first heat dissipation airflow inlet and a second heat dissipation airflow inlet. The first heat dissipation airflow inlet and the second heat dissipation airflow inlet are disposed on the left and right sides of the housing assembly 121, that is, the left and right sides of the battery packs 20, respectively. Thus, the heat dissipation airflows flow into the housing assembly 121 through the first heat dissipation airflow inlet and the second heat dissipation airflow inlet separately and flow towards the electronic components in the first accommodating space 51. The electronic components in the first accommodating space 51 include, but are not limited to, the first electric motor control board 191, the second electric motor control board 192, the battery pack control board 24, the third electric motor control board 1451, and the fourth electric motor control board 1461. The heat dissipation airflows further flow to the first cutting deck 151 and the second cutting deck 152 to dissipate heat from the first electric motor 141 and the second electric motor 142. The heat dissipation channel 60 exists between and communicates with the first cutting deck 151 and the second cutting deck 152. Therefore, based on the rotational speeds of the first electric motor 141 and the second electric motor 142 and the heat dissipation airflows flowing in through the first heat dissipation airflow inlet and the second heat dissipation airflow inlet, the heat dissipation airflow corresponding to the first electric motor 141 and the heat dissipation airflow corresponding to the second electric motor 142 may be coordinated with each other, thereby improving the heat dissipation effect of the heat dissipation airflows.

In some examples, the mower 100 further includes fans 144 connected to the electric motors. The fans 144 rotate to cause the heat dissipation airflows to flow towards the electric motors. When the mower 100 is in operation, the electric motors rotate to drive the fans 144 to rotate. The fans 144 include axial fans and centrifugal fans. The axial fans are disposed at the upper ends of the first electric motor 141 and the second electric motor 142, respectively. The centrifugal fans are disposed at the lower ends of the first electric motor 141 and the second electric motor 142, respectively. Thus, the heat dissipation airflows flow through the axial fans, then flow to the first electric motor 141 and the second electric motor 142, and finally flow out of the mower 100 through the centrifugal fans 1442. Both the axial fans and the centrifugal fans are provided so that the speed at which the heat dissipation airflows flow and the wind speed in the heat dissipation channel 60 are increased. Thus, the capability of dissipating heat from the mower 100 is improved and the heat dissipation effect is enhanced so that even if the working power of the first electric motor 141 and the second electric motor 142 is increased, the heat from the first electric motor 141 and the second electric motor 142 can still be effectively dissipated.

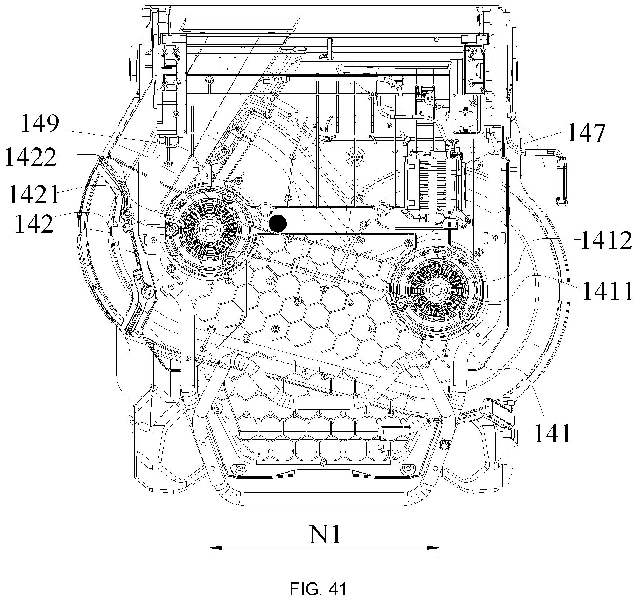

In some examples, the mower 100 further includes a synchronization member 147 drivingly connected to the first electric motor 141 and the second electric motor 142. As shown in FIG. 41, the first electric motor 141 includes a first output shaft 1411, and the second electric motor 142 includes a second output shaft 1421. A first transmission wheel 1412 is disposed on the outer side of the first output shaft 1411, and a second transmission wheel 1422 is disposed on the outer side of the second output shaft 1421. The first transmission wheel 1412 is disposed around the first output shaft 1411 and is sleeved on the first output shaft 1411, and the second transmission wheel 1422 is disposed around the second output shaft 1421 and is sleeved on the second output shaft 1421. The synchronization member 147 is drivingly connected to the first electric motor 141 and the second electric motor 142, which specifically refers to that the synchronization member 147 is sleeved on the first transmission wheel 1412 and the second transmission wheel 1422.

In some examples, multiple gears are included on each of the first transmission wheel 1412 and the second transmission wheel 1422. The synchronization member 147 is a metal chain. Multiple gears are also included on the synchronization member 147. The gears on the synchronization member 147 mesh with the gears on the first transmission wheel 1412 and the gears on the second transmission wheel 1422. The first transmission wheel 1412 and the second transmission wheel 1422 have the same dimension. Optionally, the first transmission wheel 1412 and the second transmission wheel 1422 have the same number of gears. Thus, based on the transmission of the synchronization member 147, the first transmission wheel 1412 and the second transmission wheel 1422 are rotatable at the same rotational speed, thereby causing the first electric motor 141 and the second electric motor 142 to rotate at the same rotational speed. Optionally, the first transmission wheel 1412 and the second transmission wheel 1422 may have different numbers of gears. In this case, the corresponding first electric motor 141 and the corresponding second electric motor 142 rotate at different rotational speeds. In some examples, the first transmission wheel 1412 and the second transmission wheel 1422 are provided with no gears and have smooth surfaces. The synchronization member 147 is a belt sleeved on the first transmission wheel 1412 and the second transmission wheel 1422. Optionally, when the first transmission wheel 1412 and the second transmission wheel 1422 have the same dimension, the corresponding first electric motor 141 and the corresponding second electric motor 142 rotate at the same rotational speed. Optionally, when the first transmission wheel 1412 and the second transmission wheel 1422 have different dimensions, the corresponding first electric motor 141 and the corresponding second electric motor 142 rotate at different rotational speeds.

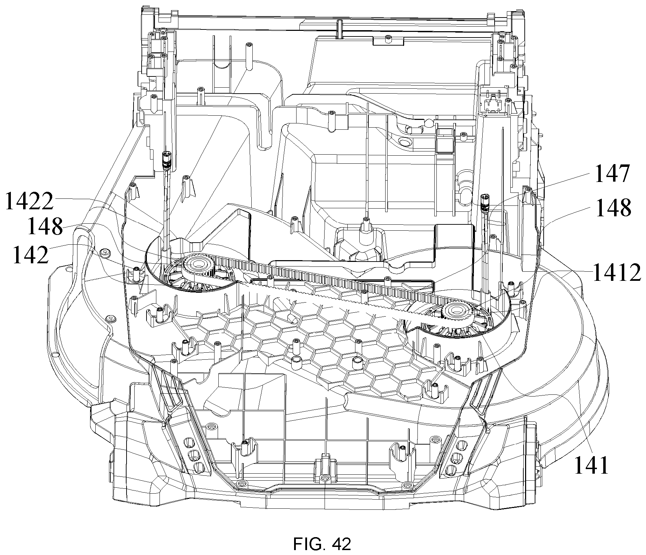

As shown in FIGS. 41 and 42, in the present application, specific description is performed using the example in which the gears are included on each of the first transmission wheel 1412 and the second transmission wheel 1422, and the number of the gears on the first transmission wheel 1412 is the same as the number of the gears on the second transmission wheel 1422.

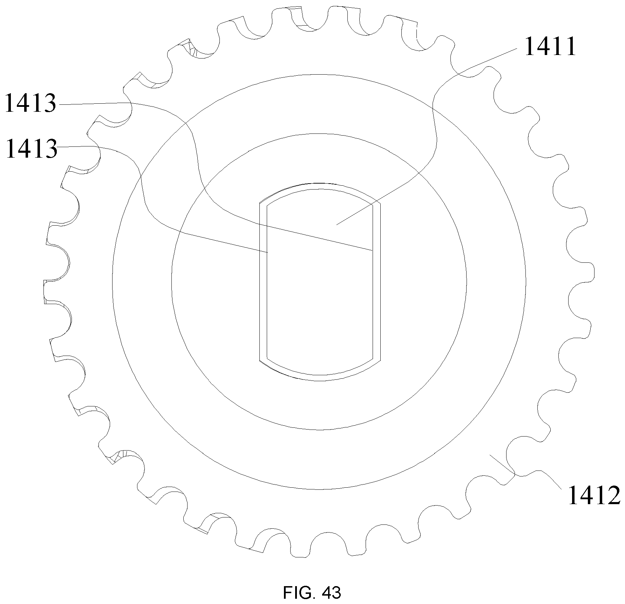

In some examples, the mower 100 further includes stop elements 148. As shown in FIG. 42, a respective one of the stop elements 148 surrounds the first output shaft 1411 and is sleeved on the first output shaft 1411. In the up and down direction of the first output shaft 1411, the stop element 148 is disposed on the upper side of the first transmission wheel 1412 to stop the first transmission wheel 1412 from falling off the first output shaft 1411. A respective one of the stop elements 148 also surrounds the second output shaft 1421 and is sleeved on the second output shaft 1421. In the up and down direction of the second output shaft 1421, the stop element 148 is disposed on the upper side of the second transmission wheel 1422 to stop the second transmission wheel 1422 from falling off the second output shaft 1421. Optionally, the stop elements 148 may be elastic elements, preventing wear and tear between the stop elements 148 and the two transmission wheels during the rotation of the first transmission wheel 1412 and the second transmission wheel 1422. Thus, the service lives of the first transmission wheel 1412 and the second transmission wheel 1422 are prolonged. In some examples, to prevent the first transmission wheel 1412 from rotating relative to the first output shaft 1411 on which the first transmission wheel 1412 is sleeved and causing the rotating first output shaft 1411 to be incapable of driving the first transmission wheel 1412 to rotate synchronously, anti-rotation structures 1413 are disposed or formed on the first output shaft 1411 so that the first transmission wheel 1412 cannot rotate relative to the first output shaft 1411. As shown in FIG. 43, the anti-rotation structures 1413 are flat structures disposed at the opposite ends of the first output shaft 1411. Thus, when rotating, the first output shaft 1411 can drive the first transmission wheel 1412 to rotate synchronously, and the flat structures prevent the relative rotation between the first output shaft 1411 and the first transmission wheel 1412. Anti-rotation structures are also disposed or formed on the second output shaft 1421, which are the same as the anti-rotation structures on the first output shaft 1411. The details are not repeated here.

In some examples, the synchronization member 147 is a timing belt 147, the mower 100 further includes a tensioner device 149. The tensioner device 149 is disposed in the housing assembly 121 and abuts against the timing belt 147. Specifically, the tensioner device 149 is disposed between the first transmission wheel 1412 and the second transmission wheel 1422 to adjust the tension at which the timing belt 147 meshes with the first transmission wheel 1412 and the second transmission wheel 1422. When the timing belt 147 meshes with the two transmission wheels too loosely, the tensioner device 149 further abuts against the timing belt 147 towards the inside of the timing belt 147 along a direction perpendicular to the timing belt 147 (that is, the tensioner device 149 further abuts against the timing belt 147 towards the first output shaft 1411 or the second output shaft 1421). Thus, the timing belt 147 meshes with the two transmission wheels more tightly, and the case is prevented where the timing belt 147 cannot drive the two transmission wheels to rotate synchronously because the timing belt 147 meshes with the two transmission wheels too loosely.

As shown in FIG. 41, the number of tensioner devices 149 may be one. Alternatively, the number of tensioner devices 149 may be greater than one and is not limited in the present application. The tensioner device 149 may be made of metal, plastics, or another material. The material of the tensioner device 149 is not limited in the present application.

In some examples, with the synchronization member 147, the phase difference between the first electric motor 141 and the second electric motor 142 is caused to remain constant. Optionally, the phase difference between the first electric motor 141 and the second electric motor 142 is greater than 0 degree and less than 90 degree. Optionally, the phase difference between the first electric motor 141 and the second electric motor 142 is greater than 30 degree and less than 90 degree. Optionally, the phase difference between the first electric motor 141 and the second electric motor 142 is greater than 30 degree and less than 60 degree. Optionally, the phase difference between the first electric motor 141 and the second electric motor 142 is greater than 45 degree and less than 90 degree. Thus, the first blade 131 and the second blade 132 do not collide with each other during rotation. Moreover, the synchronization member 147, the first electric motor 141, and the second electric motor 142 rotate synchronously. Specifically, when the first electric motor 141 is unpowered or slows down due to an increasing load, the second electric motor 142 can drive, through the synchronization member 147, the first electric motor 141 to rotate and increase the torque of the first electric motor 141. Thus, the first electric motor 141 and the second electric motor 142 can rotate at the same rotational speed, and the synchronization member 147 connecting the two electric motors also rotates synchronously at the rotational speed. Alternatively, when the second electric motor 142 is unpowered or slows down due to an increasing load, the first electric motor 141 can drive, through the synchronization member 147, the second electric motor 142 to rotate and increase the torque of the second electric motor 142. Thus, the first electric motor 141 and the second electric motor 142 can rotate at the same rotational speed, and the synchronization member 147 connecting the two electric motors also rotates synchronously at the rotational speed. In this manner, the cutting efficiency of the mower 100 under a heavy load is improved.

In some examples, as shown in FIG. 41, the distance N1 between the axis of the first electric motor 141 and the axis of the second electric motor 142 is less than the blade length of the first blade 131 or less than the blade length of the second blade 132. Thus, the rotation trajectories of the first blade 131 and the second blade 132 intersect with each other, and the cutting regions of the first blade 131 and the second blade 132 overlap each other. The ratio of the distance N1 between the axis of the first electric motor 141 and the axis of the second electric motor 142 to the blade length of the first blade 131 or the blade length of the second blade 132 is higher than or equal to 0.9 and lower than 1. Optionally, the ratio of the distance N1 between the axis of the first electric motor 141 and the axis of the second electric motor 142 to the blade length of the first blade 131 or the blade length of the second blade 132 is 0.93. Optionally, the ratio of the distance N1 between the axis of the first electric motor 141 and the axis of the second electric motor 142 to the blade length of the first blade 131 or the blade length of the second blade 132 is 0.96.

As shown in FIG. 30, along the front and rear direction, a left front walking wheel 311 of the front walking wheel assembly 31 has a first center line Y1 and a right front walking wheel 312 of the front walking wheel assembly 31 has a second center line Y2. The distance N2 from the first center line Y1 to the second center line Y2 is greater than or equal to 360 mm and less than or equal to 380 mm. Optionally, the distance N2 from the first center line Y1 to the second center line Y2 is 365 mm. Optionally, the distance N2 from the first center line Y1 to the second center line Y2 is 372 mm. Optionally, the distance N2 from the first center line Y1 to the second center line Y2 is 377 mm.

As shown in FIG. 30, along the front and rear direction, the left rear walking wheel 321 has a third center line Y3. The distance N3 from the first center line Y1 to the third center line Y3 is greater than or equal to 0 mm and less than or equal to 5 mm. Optionally, the distance N3 from the first center line Y1 to the third center line Y3 is 1 mm. Optionally, the distance N3 from the first center line Y1 to the third center line Y3 is 2.5 mm. Optionally, the distance N3 from the first center line Y1 to the third center line Y3 is 4 mm. The right rear walking wheel 322 has a fourth center line Y4. The distance N4 from the second center line Y2 to the fourth center line Y4 is the same as the distance N3. The details are not repeated here.

As shown in FIG. 30, in the left and right direction, the distance N5 from a leftmost cutting trajectory of a cutting assembly 13 to the first center line Y1 is greater than or equal to 0 mm and less than or equal to 15 mm. That is, the distance N5 between the tangent of the cutting trajectory of the first blade 131 and the first center line Y1 is greater than or equal to 0 mm and less than or equal to 15 mm. Optionally, the distance N5 between the tangent of the cutting trajectory of the first blade 131 and the first center line Y1 is 10.7 mm. Optionally, the distance N5 between the tangent of the cutting trajectory of the first blade 131 and the first center line Y1 is 11.5 mm. Optionally, the distance N5 between the tangent of the cutting trajectory of the first blade 131 and the first center line Y1 is 13 mm. Similarly, the distance N6 from a rightmost cutting trajectory of the cutting assembly 13 to the second center line Y2 is greater than or equal to 0 mm and less than or equal to 15 mm. That is, the distance N6 between the tangent of the cutting trajectory of the second blade 132 and the second center line Y2 is greater than or equal to 0 mm and less than or equal to 15 mm. Optionally, the distance N6 between the tangent of the cutting trajectory of the second blade 132 and the second center line Y2 is 5.5 mm. Optionally, the distance N6 between the tangent of the cutting trajectory of the second blade 132 and the second center line Y2 is 8.7 mm. Optionally, the distance N6 between the tangent of the cutting trajectory of the second blade 132 and the second center line Y2 is 12 mm.

With the preceding range of the distance N5 between the tangent of the cutting trajectory of the first blade 131 and the first center line Y1 and the preceding range of the distance N6 between the tangent of the cutting trajectory of the second blade 132 and the second center line Y2, the mower can move forwards along the cutting trace previously made by the walking wheel assembly when turning and cutting. Thus, the overlap of the cutting areas of the two blades is ensured and uncut grass is prevented from being left behind. In addition, on the basis of the ranges of the distances N5 and N6 and ensuring the overlap of the cutting areas, the widths of the left and right walking wheels of the walking wheel assembly are increased, thereby improving the cutting efficiency.

In some examples, the mower 100 further includes a grass collection basket connected to the body 12. When the mower 100 performs a rear discharge function, the grass clippings exiting through a grass discharge channel may be projected into the grass collection basket. When the grass collection basket is full of grass, the mower 100 is in a fully loaded state. Optionally, the overall weight of the mower 100 that is fully loaded is less than or equal to 80 kg. Optionally, the overall weight of the mower 100 that is fully loaded is less than 70 kg. Optionally, the overall weight of the mower 100 that is fully loaded is less than 65 kg. Thus, the overall weight of the mower 100 is relatively light.

In some examples, a positive pressure on the front walking wheel assembly 31 along the up and down direction is less than or equal to 80 N. Optionally, the positive pressure on the front walking wheel assembly 31 along the up and down direction is 75 N. Optionally, the positive pressure on the front walking wheel assembly 31 along the up and down direction is 66 N. Optionally, the positive pressure on the front walking wheel assembly 31 along the up and down direction is 58 N.

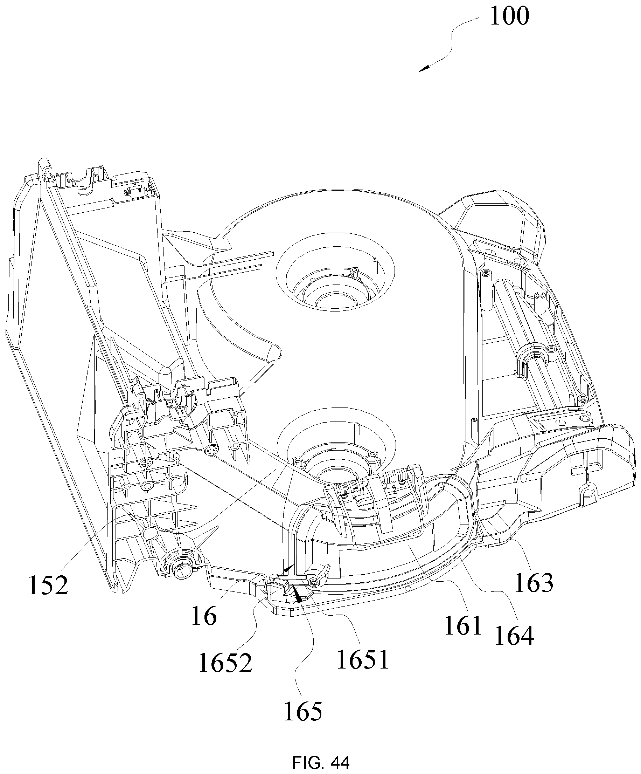

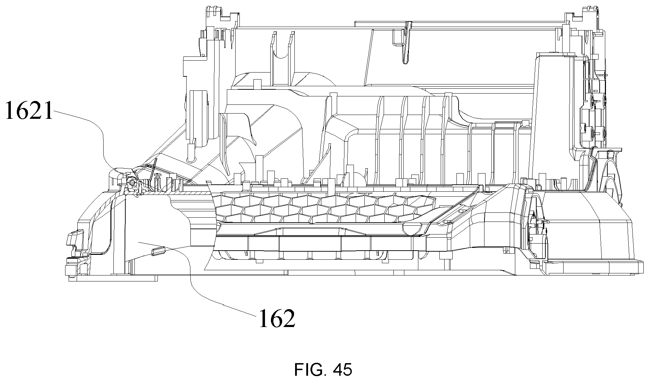

In some examples, the mower 100 further includes a side discharge assembly 16. The side discharge assembly 16 is connected to the second cutting deck 152 to perform a grass discharge function. The second electric motor 142 may control the second blade 132 to move grass clippings in the second cutting deck 152 into the side discharge assembly 16, thereby discharging the grass. As shown in FIGS. 44 to 46, the mower 100 further includes a side discharge cover plate 161 and a side discharge opening 162. The side discharge cover plate 161 is disposed between the second cutting deck 152 and the side discharge assembly 16. The side discharge opening 162 is provided on the chassis 122 made of a plastic material. The side discharge cover plate 161 at least covers the side discharge opening 162. The outer edge of the side discharge opening 162 includes an upturned structure 1621 to be mated with the side discharge cover plate 161. Thus, the side discharge cover plate 161 is relatively stably mounted on the side discharge opening 162, and any gap between the side discharge opening 162 and the side discharge cover plate 161 is prevented, thereby preventing the leakage of the grass clippings through the gap between the side discharge opening 162 and the side discharge cover plate 161. In addition, the upturned structure 1621 can enhance the strength of the side discharge opening 162.

In some examples, the opening circumference of the side discharge opening 162 is greater than or equal to 500 mm. Optionally, the opening circumference of the side discharge opening 162 is 550 mm. Optionally, the opening circumference of the side discharge opening 162 is 620 mm. Optionally, the opening circumference of the side discharge opening 162 is 680 mm. In some examples, the opening area of the side discharge opening 162 is greater than or equal to 200 cm². Optionally, the opening area of the side discharge opening 162 is 220 cm². Optionally, the opening area of the side discharge opening 162 is 245 cm². Optionally, the opening area of the side discharge opening 162 is 260 cm².

Before the mower 100 performs the grass discharge function by using the side discharge assembly 16, the side discharge cover plate 161 needs to be opened so that the second cutting deck 152 communicates with the side discharge assembly 16. Furthermore, the side discharge cover plate 161 is opened and the second cutting deck 152 is caused to have a gap so that the air pressure in the second cutting deck 152 is lower than the air pressure in the first cutting deck 151. Thus, it is easier for the grass clippings to enter the second cutting deck 152 from the first cutting deck 151.

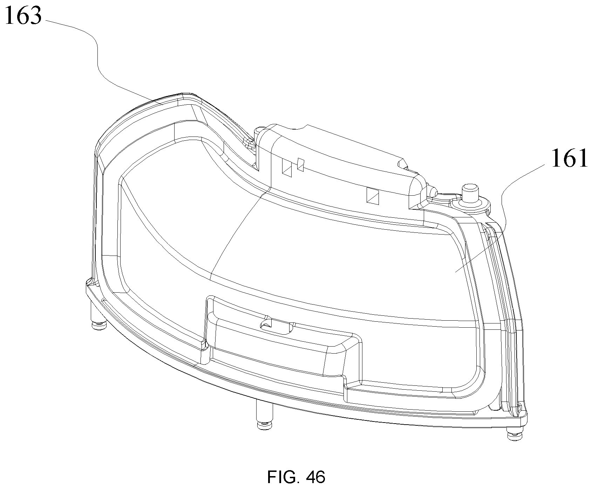

As shown in FIGS. 44 and 46, the mower 100 further includes a reinforcement member 163 for enhancing the strength of the side discharge opening 162 and reducing the probability that the side discharge opening 162 made of the plastic material is deformed. Optionally, the reinforcement member 163 may be disposed at the opening edge of the side discharge opening 162. Optionally, the reinforcement member 163 may be disposed at the cover edge of the side discharge cover plate 161. The reinforcement member 163 may be fixedly connected to the opening edge of the side discharge opening 162 or the cover edge of the side discharge cover plate 161 through screws or the like. Alternatively, the reinforcement member 163 may be integrally formed with the chassis 122 where the side discharge opening 162 is located or the side discharge cover plate 161 through injection molding. Optionally, the reinforcement member 163 may have a closed annular structure. Optionally, the reinforcement member 163 may have an open U-shaped structure. Optionally, the reinforcement member 163 may have a structure in another shape. The shape of the structure of the reinforcement member 163 is not limited in the present application. Optionally, the reinforcement member 163 may be made of plastics. Optionally, the reinforcement member 163 may be made of metal. Optionally, the reinforcement member 163 may be made of any other material. The material of the reinforcement member 163 is not limited in the present application.

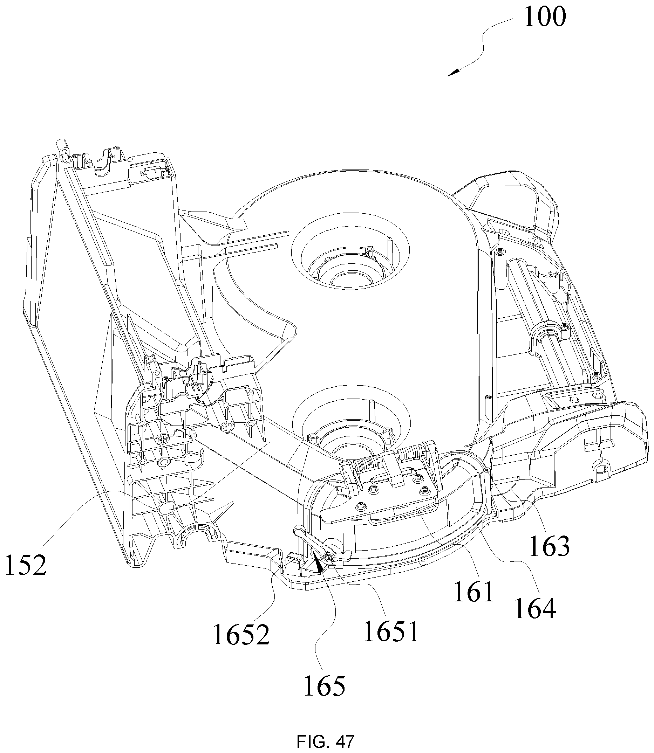

As shown in FIG. 44, the mower 100 further includes an anti-collision member 164. The anti-collision member 164 is disposed at the lower end of the side discharge opening 162 and the reinforcement member 163 to prevent cracks or breaks in the lower chassis 122 subjected to a collision. The mower 100 further includes a locking assembly 165 disposed on the chassis 122 and the side discharge cover plate 161. The locking assembly 165 includes a lever 1651 and a mating member 1652. The mating member 1652 is fixed to the chassis 122. A first end of the lever 1651 is fixed to the side discharge cover plate 161. The lever 1651 is rotatable relative to the side discharge cover plate 161 around the first end. A second end of the lever 1651 is used for being mated with the mating member 1652. When the lever 1651 is engaged with the mating member 1652, as shown in FIG. 44, the locking assembly 165 is in a locking state. Thus, in the case where the side discharge cover plate 161 covers the side discharge opening 162, the chassis 122 and the side discharge cover plate 161 are locked, and the side discharge cover plate 161 cannot be opened. When the lever 1651 is not engaged with the mating member 1652, as shown in FIG. 47, the locking assembly 165 is in an unlocking state. In this case, the side discharge cover plate 161 can be opened from the side discharge opening 162. Thus, with the locking assembly 165, when the side discharge cover plate 161 covers the side discharge opening 162, it can be ensured that the side discharge cover plate 161 is not opened, thereby preventing the leakage of the grass clippings when the grass is cut.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A mower (100), comprising:
a body (12) comprising a housing assembly (121);
a cutting element (13) used for performing a cutting function and comprising a first blade (131) and a second blade (132);
a chassis (122) for accommodating at least part of the cutting element;
a drive assembly (14) comprising a first electric motor (141) configured to drive the first blade and a second electric motor (142) configured to drive the second blade;
a battery pack (20) configured to power the drive assembly; and
a synchronization member (147) drivingly connected to the first electric motor and the second electric motor.

2. The mower according to claim 1, wherein a phase difference between the first electric motor and the second electric motor remains substantially constant, and the phase difference is greater than 0 degree and less than 90 degree.

3. The mower according to claim 1, wherein a distance (N1) between an axis of the first electric motor and an axis of the second electric motor is less than a blade length of the first blade or less than a blade length of the second blade.

4. The mower according to claim 3, wherein a ratio of the distance to the blade length of the first blade or the blade length of the second blade is higher than or equal to 0.9 and lower than 1.

5. The mower according to claim 1, further comprising walking wheels, wherein the walking wheels comprise a front walking wheel assembly (31) and a rear walking wheel assembly (32), a left front walking wheel (311) has a first center line (Y1) and a right front walking wheel (312) has a second center line (Y2) along a front and rear direction, and a distance (N2) from the first center line to the second center line is greater than or equal to 360 mm and less than or equal to 380 mm.

6. The mower according to claim 5, wherein a left rear walking wheel (321) has a third center line (Y3) along the front and rear direction, and a distance (N3) from the first center line to the third center line is greater than or equal to 0 mm and less than or equal to 5 mm.

7. The mower according to claim 5, wherein in a left and right direction, a distance (N5) from a leftmost cutting trajectory of a cutting assembly to the first center line is greater than or equal to 0 mm and less than or equal to 15 mm.

8. The mower according to claim 5, wherein in a left and right direction, a distance (N6) from a rightmost cutting trajectory of a cutting assembly to the second center line is greater than or equal to 0 mm and less than or equal to 15 mm.

9. The mower according to claim 1, wherein transmission wheels (1412, 1422) are disposed on an output shaft (1411) of the first electric motor and an output shaft (1421) of the second electric motor, respectively, and the synchronization member is mounted on the transmission wheels.

10. The mower according to claim 9, wherein an anti-rotation structure (1413) is disposed or formed on each of the output shaft of the first electric motor and the output shaft of the second electric motor.

11. The mower according to claim 9, further comprising: stop elements (148) for stopping the transmission wheels from falling off the output shaft of the first electric motor and the output shaft of the second electric motor.

12. The mower according to claim 9, wherein a transmission wheel (1412) on the output shaft (1411) of the first electric motor and a transmission wheel (1422) on the output shaft (1421) of the second electric motor have the same dimension so that the first electric motor and the second electric motor rotate at the same rotational speed.

13. The mower according to claim 9, where a transmission wheel (1412) on the output shaft (1411) of the first electric motor and a transmission wheel (1422) on the output shaft (1421) of the second electric motor have different dimensions so that the first electric motor and the second electric motor rotate at the different rotational speeds.

14. The mower according to claim 1, wherein the synchronization member is a timing belt.

15. The mower according to claim 14, further comprising a tensioner device (149) abutting against the timing belt to adjust the tension of the timing belt.
